# EUROPEAN PATENT APPLICATION

(11) **EP 4 841 772 A1**
(43) Date of publication of application: **18.11.2026**
(21) Application number: 24951074.4
(22) Date of filing: 16.08.2024
(51) Int. Cl.: H01M 50/244, H01M 50/249, H01M 10/625, H01M 10/655, H01M 10/6556, H01M 50/289, H01M 10/6568

(54) **BATTERY DEVICE AND ELECTRIC DEVICE**

(71) Applicant: Contemporary Amperex Technology Co., Limited, Ningde, Fujian 352100 (CN)
(72) Inventor: WANG, Liangyi, Ningde, Fujian 352100 (CN); WANG, Yalei, Ningde, Fujian 352100 (CN); QIN, Feng, Ningde, Fujian 352100 (CN); WANG, Peng, Ningde, Fujian 352100 (CN); WANG, Zhi, Ningde, Fujian 352100 (CN); CHEN, Liangmei, Ningde, Fujian 352100 (CN); CHEN, Qicai, Ningde, Fujian 352100 (CN)
(74) Representative: Lorenz Seidler Gossel Part. mbB
(86) International application number: PCT/CN2024/112811
(87) International publication number: WO 2026/036395

(57) **Abstract**

A battery device (100) and an electric device. The battery device (100) includes a battery cell assembly (10), a beam assembly (21), and a thermal management component (30). The beam assembly (21) includes a first mounting beam (211) and a hanging beam (210) that are connected to each other. The first mounting beam (211) is configured to be connected to the battery cell assembly (10); and the hanging beam (210) is configured to connect the battery cell assembly (10) to an electric device body. The thermal management component (30) comprises a body (31), a first lead-out portion (32), and a first joint (34). The body (31) is configured to exchange heat with the battery cell assembly (10). The body (31) is located on one side of the first mounting beam (211) along a first direction; and the first joint (34) is located on the other side of the first mounting beam (211) along the first direction. The first lead-out portion (32) connects the body (31) to the first joint (34). The beam assembly (21) is provided with a first clearance portion (40), and the first lead-out portion (32) passes through the first clearance portion (40). The technical solution can effectively increase the energy density of the battery device (100).

## Description

### TECHNICAL FIELD

The present application relates to the field of battery technologies, and in particular, to a battery device and an electric device.

### BACKGROUND

Energy conservation and emission reduction are key to sustainable development of the automobile industry. Electric vehicles have become an important part of sustainable development of the automobile industry due to their advantages of energy conservation and environmental protection. For electric vehicles, battery technology is an important factor related to their development.

In the development of battery technology, how to improve energy density of battery devices is a technical problem that needs to be solved urgently in battery technology.

### SUMMARY

The present application provides a battery device and an electric device. The technical solution provided by the present application can effectively improve the energy density of the battery device.

According to a first aspect, some embodiments of the present application provide a battery device. The battery device includes a battery cell assembly, a beam assembly, and a thermal management component. The beam assembly includes a first mounting beam and a hanging beam that are connected to each other. The first mounting beam is configured to be connected to the battery cell assembly. The hanging beam is configured to connect the battery cell assembly to an electric device body. The thermal management component includes a body, a first lead-out portion, and a first joint. The body is configured to exchange heat with the battery cell assembly. The body is located on one side of the first mounting beam along a first direction. The first joint is located on the other side of the first mounting beam along the first direction. The first lead-out portion connects the body to the first joint. The beam assembly is provided with a first clearance portion, and the first lead-out portion passes through the first clearance portion.

In the above solution, by providing the first clearance wall on the beam assembly for the first lead-out portion to pass through, the first joint is arranged on a side of the first mounting beam facing away from the battery cell group. On the one hand, when a medium leaks at a connection position between the first joint and the first lead-out portion, the phenomenon that the medium directly acts on the battery cell group can be alleviated, so as to reduce the risk that the battery cell assembly is corroded by the medium or experiences an internal short circuit, so that the battery device has high reliability. On the other hand, the first joint does not occupy the space where the battery cell assembly is located, and the first lead-out portion utilizes the space occupied by the beam assembly itself to connect to the first joint, which can reduce the space occupancy rate of the thermal management component, so that the battery has more space to accommodate the battery cell assembly, which helps to increase the volumetric energy density of the battery device.

According to some embodiments of the present application, the first clearance portion is provided on the first mounting beam.

In the above solution, by arranging the first clearance portion on the first mounting beam, the interference of the hanging beam with the thermal management component can be reduced, thereby reducing the difficulty of assembling the thermal management component to the beam assembly and reducing the pass-through difficulty of the first lead-out portion, so that the first lead-out portion can quickly connect the body to the first joint, which helps to improve the manufacturing efficiency of the battery device.

According to some embodiments of the present application, the first clearance portion is a first clearance groove, and the first clearance groove is formed by a side of the first mounting beam facing away from the hanging beam recessing toward the hanging beam.

In the above solution, by setting the first clearance portion as the first clearance groove, on the one hand, the molding difficulty of the first clearance portion can be reduced and the manufacturing efficiency of the battery device can be improved. On the other hand, the first lead-out portion can be directly arranged in the first clearance groove from the notch of the first clearance groove to connect the body to the first joint, which is beneficial to the improvement of battery manufacturing efficiency.

According to some embodiments of the present application, the first lead-out portion is integrally formed with the body.

In the above solution, with the first lead-out portion and the body manufactured via an integral molding process, on the one hand, the thermal management component can have high integration, high manufacturing efficiency, and reduced number of parts, which is beneficial to the improvement of battery manufacturing efficiency. On the other hand, the thermal management component can have high structural strength, which can effectively reduce the risk of leakage of the thermal management component, thereby helping to improve the thermal management efficiency of the thermal management component for the battery cell assembly, and helping to improve battery reliability.

According to some embodiments of the present application, the first clearance portion is provided on the hanging beam.

In the above solution, by arranging the first clearance portion on the hanging beam, on the one hand, the first lead-out portion can appropriately utilize the space where the hanging beam is located. On the other hand, the influence on the structural strength of the first mounting portion caused by the arrangement of the first clearance portion can be reduced, so that the first mounting portion can effectively fix the battery cell assembly, and the battery device has high reliability.

According to some embodiments of the present application, at least part of the first lead-out portion is embedded in the hanging beam.

In the above solution, by setting at least part of the first lead-out portion to be embedded in the hanging beam, on the one hand, the assembly and positioning of the first lead-out portion can be realized, and the assembly efficiency of the first lead-out portion can be improved, thereby helping to improve the battery manufacturing efficiency. On the other hand, the hanging beam can play a role in protecting the first lead-out portion, thereby reducing the risk that structure damage caused by impact on the first lead-out portion results in medium leakage that affects the thermal management efficiency of the battery cell assembly, and helping to improve battery reliability. On yet another aspect, the first lead-out portion can effectively utilize the space where the hanging beam is located, so that the battery structure is compact, which helps to increase the volumetric energy density of the battery.

According to some embodiments of the present application, the first lead-out portion is connected to a side of the body facing away from the battery cell assembly.

In the above solution, by setting the first lead-out portion to be connected to the side of the body facing away from the battery cell assembly, the first lead-out portion is far away from the battery cell group. On the one hand, this can reduce the risk that the first lead-out portion interfering with the battery cell group results in high assembly difficulty of the thermal management component and affects battery manufacturing efficiency. On the other hand, this can reduce the occupation of the space where the battery cell assembly is located by the first lead-out portion, which helps to increase the volumetric energy density of the battery. On yet another aspect, both the first joint and the first lead-out portion can be far away from the battery cell, so that when a medium leaks from the first joint or the first lead-out portion, the risk that the medium affects the battery cell assembly can be effectively reduced, and thus the battery device has high reliability.

According to some embodiments of the present application, the first lead-out portion includes an adapter tube and an adapter joint. The adapter joint is arranged on the side of the body facing away from the battery cell assembly. The adapter tube connects the adapter joint to the first joint. At least part of the adapter tube is embedded in the hanging beam.

In the above solution, the first lead-out portion includes the adapter tube and the adapter joint that are mated with each other. The adapter tube connects the adapter joint to the first joint to provide an external medium to the flow channel in the body, which can reduce the assembly difficulty of the thermal management component, improve the maintenance efficiency of the thermal management component, and reduce the maintenance cost.

According to some embodiments of the present application, along a direction from the first mounting beam to the hanging beam, the adapter joint does not exceed a surface of the hanging beam facing away from the first mounting beam.

In the above solution, setting the adapter joint so as not to exceed the surface of the hanging beam facing away from the first mounting beam, on the one hand, can reduce the risk that exposure of the adapter joint results in low battery space utilization and affects the volumetric energy density of the battery. On the other hand, the hanging beam can protect the adapter joint, and thus reduce the risk that structural damage caused by external impact on the adapter joint leads to medium leakage, so that the battery has high reliability.

According to some embodiments of the present application, the first lead-out portion extends along the first direction.

In the above solution, by setting the first lead-out portion to extend along the first direction, the occupation of the internal space of the battery by the first lead-out portion can be reduced, and the efficiency of the first lead-out portion passing through the beam assembly can be improved. On the one hand, the problem of high leakage risk caused by the oversized first lead-out portion is alleviated. On the other hand, the thermal management component can have a compact structure, which helps to increase the volumetric energy density of the battery.

According to some embodiments of the present application, the first mounting beam extends along a second direction, the first mounting beam and the hanging beam are arranged along a third direction, and the first direction, the second direction, and the third direction are perpendicular to each other.

According to some embodiments of the present application, the hanging beam is integrally formed with the first mounting beam, or the hanging beam and the first mounting beam are separate structures.

In the above solution, in some embodiments, the hanging beam and the first mounting beam are manufactured via an integral molding process, so that the hanging beam and the first mounting beam have high structural strength, which can improve the structural reliability of the battery and facilitate the stable mounting of the battery on the electric device body. In some embodiments, by setting the hanging beam and the first mounting beam as mutually independent separate structures, the manufacturing difficulty of the beam assembly can be reduced, and the maintenance cost of the beam assembly can be reduced.

According to some embodiments of the present application, the body includes a first plate body and a second plate body. The first plate body and the second plate body are stacked and together form a first flow channel for accommodating a medium.

In the above solution, the body has a simple structure and is easy to process and manufacture. The body includes the first plate body and the second plate body that are stacked, and the first plate body and the second plate body together define the first flow channel for accommodating a medium to achieve heat exchange with the battery cell assembly, so that the battery is at a suitable temperature to have good charge and discharge performance.

According to some embodiments of the present application, along the third direction, a side of the hanging beam facing away from the mounting beam is formed with a hanging hole, and the third direction is parallel to the arrangement direction of the hanging beam and the mounting beam.

In the above solution, providing the hanging hole on the side of the hanging beam facing away from the mounting beam is convenient to mount the battery on the electric device body.

According to some embodiments of the present application, the battery device includes a box. The box has an accommodating cavity inside. The accommodating cavity is configured to accommodate the battery cell assembly. The box includes the beam assembly. The first mounting beam is located in the accommodating cavity. The first joint is located outside the accommodating cavity.

In the above solution, the battery includes the box, and the battery cell assembly is located in the box, so that the influence of external substances on the battery cell assembly can be reduced, and thus the battery has high reliability. By arranging the first joint outside the box, when a medium leaks at the connection between the first joint and the first lead-out portion or at the connection between the first joint and an external structural member, the phenomenon that the medium enters the accommodating cavity can be alleviated, the risk that the medium affecting the battery cell assembly causes the battery cell assembly to be corroded or short-circuited can be reduced, which is beneficial to the improvement of battery reliability.

According to some embodiments of the present application, the box further includes a first wall. The first joint is located on a side of the first wall facing away from the accommodating cavity. The first lead-out portion passes through the first wall.

In the above solution, by arranging the first joint on the side of the first wall facing away from the accommodating cavity, the part of the thermal management component that is relatively prone to leakage can be effectively arranged outside the accommodating cavity, thereby effectively reducing the risk that the battery cell assembly is corroded or short-circuited by the medium, so that the battery device has high reliability.

According to some embodiments of the present application, the first wall has a second clearance portion running through along the first direction. The first lead-out portion runs through the second clearance portion. An adhesive member is arranged between an inner wall of the second clearance portion and the first lead-out portion.

In the above solution, by providing the second clearance portion on the first wall for the first lead-out portion to pass through, the occupation of the internal space of the box by the first lead-out portion can be reduced, and the structure of the thermal management component can be simplified, thereby helping to increase the volumetric energy density of the battery. By arranging the adhesive member between the inner wall of the second clearance portion and the first lead-out portion, the connection stability between the thermal management component and the box can be effectively improved, so that the battery structure is highly stable, which is beneficial to the improvement of battery reliability.

According to some embodiments of the present application, the battery device further includes an electrical connector connected to the battery cell assembly. The first wall is formed with a first through hole. The electrical connector is mounted in the first through hole. The first wall and the first mounting beam are spaced apart along the first direction. A part of the electrical connector is located between the first wall and the first mounting beam.

In the above solution, by mounting the electrical connector in the first through hole, the electrical connector can be conveniently connected to an external component to realize electrical exchange between the battery and the electric device body. By arranging a part of the electrical connector between the first wall and the first mounting beam, the risk of mutual interference between the electrical connector and the battery cell assembly can be effectively reduced, the assembly difficulty of the battery device can be reduced, and the manufacturing efficiency of the battery device can be improved.

According to some embodiments of the present application, the beam assembly has a mounting hole running through along the third direction. The body is connected to the beam assembly and covers the mounting hole. The third direction is parallel to an arrangement direction of the hanging beam and the mounting beam.

In the above solution, with the body of the thermal management component connected to the beam assembly and covering the mounting hole, on the one hand, the thermal management component and the beam assembly can be integrated into a whole, so that the structural strength of the battery device can be improved, the influence of external impact on the battery device can be reduced, and the battery device can have high reliability. On the other hand, the thermal management component can be used to replace the bottom plate, reducing the number of parts of the battery device, which is beneficial to the improvement of the gravimetric energy density of the battery device.

According to some embodiments of the present application, the mounting hole includes a first hole segment and a second hole segment arranged along the third direction. The second hole segment is away from the accommodating cavity relative to the second hole segment. A hole wall surface of the first hole segment and a hole wall surface of the second hole segment are connected by a step surface. The step surface is disposed facing towards the accommodating cavity. The body is located in the first hole segment, and the body abuts against the step surface.

In the above solution, the mounting hole includes the first hole segment and the second hole segment arranged along the third direction. The hole wall surface of the first hole segment and the hole wall surface of the second hole segment are connected by the step surface, and the step surface is disposed facing towards the accommodating cavity in the third direction. Arranging the body of the thermal management component to be in the first hole segment and abut against the step surface, on the one hand, is convenient to mount the thermal management component in the mounting hole, which is beneficial to reducing the assembly difficulty between the thermal management component and the beam assembly. On the other hand, the step surface can also provide a certain limiting effect and positioning effect on the thermal management component in the third direction, which is beneficial to improving the stability and reliability of the thermal management component mounted on the beam assembly.

According to some embodiments of the present application, the beam assembly further includes a support beam. The support beam is arranged in the second hole segment and divides the second hole segment into at least two sub-through holes. Along the third direction, the side of the body facing away from the battery cell assembly is connected to the support beam.

In the above solution, by arranging the support beam in the mounting hole, on the one hand, the structural strength of the beam assembly can be improved, so that the beam assembly can effectively bear the gravity of the battery cell assembly and stably mount the battery on the electric device body. On the other hand, the support beam can also provide a certain supporting effect on the thermal management component, which is beneficial to reducing the risk of deformation of the thermal management component during use, and the support beam can also provide a certain protective effect on the thermal management component, which is beneficial to alleviating the phenomenon of direct collision between the thermal management component and the external environment.

According to some embodiments of the present application, the beam assembly further includes a second mounting beam. The second mounting beam is connected to the battery cell assembly. Along the first direction, the second mounting beam is spaced apart from the first mounting beam. The battery cell assembly is located between the first mounting beam and the second mounting beam.

In the above solution, the first mounting beam and the second mounting beam being spaced apart along the first direction, on the one hand, can offer an assembly and positioning effect for the battery cell assembly, which is beneficial to reducing the difficulty of assembling the battery cell assembly to the box. On the other hand, the battery cell assembly can be effectively fixed to the beam assembly, so that the battery cell assembly, the mounting beam, and the hanging beam are integrated into a whole, which is beneficial to the improvement of the structural strength of the battery device and enables stable mounting thereof on the electric device body.

According to some embodiments of the present application, the box includes a first box body and a second box body. The first box body and the second box body fit each other and together define an accommodating cavity. The first box body includes the beam assembly.

According to some embodiments of the present application, the first box body further includes the first wall and a second wall. The beam assembly connects the first wall to the second wall, and the first wall and the second wall are spaced apart along the first direction. The second box body includes a third wall, a fourth wall, and a fifth wall. The third wall connects the fourth wall to the fifth wall, and the fourth wall and the fifth wall are spaced apart along the second direction. The third wall and the beam assembly are arranged opposite to each other along the third direction. The first direction, the second direction, and the third direction are perpendicular to each other.

In the above solution, both the first box body and the second box body being a "U" shaped structure, on the one hand, is convenient for the first box body and the second box body to fit each other and together define the assembly cavity for accommodating the battery cell. On the other hand, the manufacturing difficulty of the first box body and the second box body can be reduced, and subsequent maintenance of the battery cell assembly accommodated in the box is facilitated, which is beneficial to reducing the later maintenance difficulty of the battery device.

According to some embodiments of the present application, the fourth wall and the fifth wall are respectively connected to two sides of the beam assembly along the second direction.

In the above solution, the fourth wall and the fifth wall are respectively connected to the two sides of the beam assembly along the second direction, so that the connection surface between the fourth wall and the beam assembly and the connection surface between the fifth wall and the beam assembly occupy less space in the second direction, so as to improve the space utilization rate of the battery in the second direction, thereby enabling more battery cell assemblies to be accommodated in the box and further increasing the volumetric energy density of the battery device.

According to a second aspect, some embodiments of the present application further provide an electric device. The electric device includes the battery device provided in the first aspect. The battery device is configured to provide electric energy.

The above description is only an overview of the technical solution of the present application. In order to more clearly understand the technical means of the present application, it can be implemented in accordance with the content of the description. In order to make the above and other purposes, features, and advantages of the present application more obvious and easier to understand, the specific embodiments of the present application are specifically listed below.

### BRIEF DESCRIPTION OF DRAWINGS

In order to more clearly illustrate the technical solutions of the embodiments of the present application, the drawings required to be used in the embodiments will be briefly introduced below. It should be understood that the following drawings only show some embodiments of the present application, and therefore should not be regarded as limiting the scope. For those of ordinary skill in the art, other related drawings can also be obtained according to these drawings without creative labor.
FIG. 1 is a schematic structural diagram of a vehicle in some embodiments of the present application;
FIG. 2 is an exploded perspective view of a battery device in some embodiments of the present application;
FIG. 3 is a schematic structural diagram of a beam assembly and a thermal management component in some embodiments of the present application;
FIG. 4 is an internal schematic diagram of a partial structure of a beam assembly in some embodiments of the present application;
FIG. 5 is an exploded perspective view of a beam assembly and a thermal management component in some embodiments of the present application;
FIG. 6 is an enlarged view of portion A in FIG. 5;
FIG. 7 is a schematic diagram of a thermal management component in some embodiments of the present application;
FIG. 8 is an exploded perspective view of a beam assembly and a thermal management component in some other embodiments of the present application;
FIG. 9 is an internal schematic diagram of a partial structure of a battery device in some other embodiments of the present application;
FIG. 10 is an enlarged view of portion B in FIG. 9;
FIG. 11 is an exploded perspective view of a thermal management component in some embodiments of the present application;
FIG. 12 is a schematic diagram of a partial structure of a first box body and a thermal management component in some embodiments of the present application;
FIG. 13 is an enlarged view of portion C in FIG. 5; and
FIG. 14 is a schematic diagram of a second box body in some embodiments of the present application.

Reference signs: 1000. vehicle; 100. battery device; 200. controller; 300. motor;
10. battery cell assembly; 11. battery cell; 20. box; 20a. first box body; 20b. second box body; 21. beam assembly; 210. hanging beam; 2100. first opening; 2101. second opening; 2102. third surface; 2103. hanging hole; 211. first mounting beam; 2110. substructure; 212. second mounting beam; 213. mounting hole; 2130. first hole segment; 2131. second hole segment; 2132. step surface; 214. support beam; 22. first wall; 23. second wall; 24. third wall; 25. fourth wall; 26. fifth wall; 30. thermal management component; 31. body; 31a. first surface; 31b. second surface; 310. first plate body; 311. second plate body; 312. first flow channel; 32. first lead-out portion; 32a. first part; 32b. second part; 320. adapter tube; 321. adapter joint; 33. second lead-out portion; 34. first joint; 35. second joint; 40. first clearance portion; 50. second clearance portion; 60. electrical connector; x. first direction; y. second direction; and z. third direction.

### DESCRIPTION OF EMBODIMENTS

In order to make the purposes, technical solutions, and advantages of the embodiments of the present application clearer, the technical solutions in the embodiments of the present application will be clearly described below in conjunction with the drawings in the embodiments of the present application. Obviously, the described embodiments are part of the embodiments of the present application, not all of the embodiments. Based on the embodiments in the present application, all other embodiments obtained by those of ordinary skill in the art without creative labor fall within the protection scope of the present application.

Unless otherwise defined, all technical and scientific terms used in the present application have the same meaning as those generally understood by those skilled in the technical field to which the present application belongs. The terms used in the description of the present application are only for the purpose of describing specific embodiments and are not intended to limit the present application. The terms "include" and "have" and any variations thereof in the description and claims of the present application and the above drawings are intended to cover non-exclusive inclusion. The terms "first", "second", and the like in the description and claims of the present application or the above drawings are used to distinguish different objects, and are not used to describe a specific order or primary-secondary relationship.

The reference to "embodiment" in the present application means that a specific feature, structure, or characteristic described in conjunction with the embodiment may be included in at least one embodiment of the present application. The appearance of the phrase in various positions in the description does not necessarily refer to the same embodiment, nor is it an independent or alternative embodiment that is mutually exclusive with other embodiments.

In the description of the present application, it should be noted that, unless otherwise clearly specified and limited, the terms "install", "connect", "link", and "attach" should be understood in a broad sense. For example, it can be a fixed connection, a detachable connection, or an integral connection. It can be a direct connection or an indirect connection through an intermediate medium, and it can be the internal communication of two elements. For those of ordinary skill in the art, the specific meanings of the above terms in the present application can be understood according to specific circumstances.

The term "and/or" in the present application is only a description of the association relationship of associated objects, indicating that three relationships can exist. For example, A and/or B can mean: A exists alone, both A and B exist, and B exists alone. In addition, the character "/" in the present application generally indicates that the front and rear associated objects are in an "or" relationship.

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary descriptions and should not constitute any limitation on the present application.

"A plurality of" appearing in the present application refers to two or more (including two).

In the embodiments of the present application, the battery cell may be a secondary battery. A secondary battery refers to a battery cell that can be recharged after the battery cell is discharged, so as to activate an active material for continued use.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead-acid battery, or the like. The embodiments of the present application are not limited thereto.

A battery cell generally includes an electrode assembly. The electrode assembly includes a positive electrode, a negative electrode, and a separator. During charge and discharge of the battery cell, active ions (such as lithium ions) are intercalated and deintercalated between the positive electrode and the negative electrode. The separator is arranged between the positive electrode and the negative electrode, which can prevent the positive and negative electrodes from short-circuiting and allow active ions to pass through.

In some embodiments, the positive electrode may be a positive electrode sheet. The positive electrode sheet may include a positive electrode current collector and a positive electrode active material arranged on at least one surface of the positive electrode current collector.

In some embodiments, the negative electrode may be a negative electrode sheet. The negative electrode sheet may include a negative electrode current collector.

In some embodiments, the electrode assembly further includes a separator. The separator is arranged between the positive electrode and the negative electrode.

In some embodiments, the separator is a separator film. The separator film can be of various types. Any well-known porous structure separator film with good chemical stability and mechanical stability can be selected.

In some embodiments, the battery cell further includes an electrolyte. The electrolyte plays a role in conducting ions between the positive and negative electrodes. The electrolyte can be liquid, gel, or solid. The liquid electrolyte includes an electrolytic salt and a solvent.

In some embodiments, the electrode assembly is a wound structure. The positive electrode sheet and the negative electrode sheet are wound into a wound structure.

In some embodiments, the electrode assembly is a laminated structure.

As an example, a plurality of positive electrode sheets and a plurality of negative electrode sheets may be provided respectively, and the plurality of positive electrode sheets and the plurality of negative electrode sheets are alternately stacked.

As an example, a plurality of positive electrode sheets may be provided, and a negative electrode sheet is folded to form a plurality of folded segments that are stacked, with one positive electrode sheet sandwiched between adjacent folded segments.

As an example, both a positive electrode sheet and a negative electrode sheet are folded to form a plurality of folded segments that are stacked.

As an example, a plurality of separators may be provided and arranged between any adjacent positive electrode sheets or negative electrode sheets.

As an example, the separator may be provided contiguously and arranged between any adjacent positive electrode sheets or negative electrode sheets by folding or winding.

In some embodiments, the shape of the electrode assembly may be cylindrical, flat, or polygonal prism, or the like.

In some embodiments, the electrode assembly is provided with tabs. The tabs can lead current out of the electrode assembly. The tabs include a positive tab and a negative tab.

In some embodiments, the battery cell may include a housing. The housing is configured to package the electrode assembly, the electrolyte, and other components. The housing may be a steel shell, an aluminum shell, a plastic shell (such as polypropylene), a composite metal shell (such as a copper-aluminum composite shell), or an aluminum-plastic film, or the like.

As an example, the battery cell may be a cylindrical battery cell, a prismatic battery cell, a pouch battery cell, or a battery cell of other shapes. The prismatic battery cell includes but is not limited to a square-shell battery cell, a bladeshaped battery cell, and a polygonal-prism battery. The polygonal-prism battery is, for example, a hexagonal-prism battery.

The battery device (Battery Apparatus) mentioned in the embodiments of the present application may include one or more battery cell assemblies for providing voltage and capacity. The battery cell assembly (Battery Cell Assembly) may include a plurality of battery cells. The plurality of battery cells are connected in series, parallel, or a mixture of series and parallel through busbar members.

In some embodiments, the battery cell assembly (Battery Cell Assembly) is usually formed by arranging a plurality of battery cells. As an example, the battery cell assembly may be a battery module (Battery Module). The battery module is formed by arranging and fixing a plurality of battery cells into an independent module. As an example, the battery module may be formed by bundling a plurality of battery cells with straps.

In some embodiments, the battery device may be a battery pack (Battery Pack). The battery pack includes a box and one or more battery cell assemblies. The battery cell assembly is accommodated in the box.

As an example, the battery cell assembly may be a battery module. The battery cell assembly may be accommodated in the box by fixing the battery module in the box.

As an example, the battery cell assembly may alternatively be accommodated in the box by directly fixing a plurality of battery cells in the box.

As an example, the box may include a first box body and a second box body. The first box body and the second box body are fastened together so that a closed space is formed inside the box to accommodate the battery cell assembly. The closure here refers to covering or closing, which may be sealed or unsealed. The first box body may be a top cover or a bottom plate.

As an example, the box may include a top cover, a frame, and a bottom plate. The top cover and the bottom plate are respectively connected to the frame so that a closed space is formed inside the box to accommodate the battery cell assembly.

As an example, the box may be used as a part of a chassis structure of a vehicle. For example, the top cover of the box may become at least a part of the floor of the vehicle, or the frame of the box may become at least a part of a cross member and longitudinal rail of the vehicle.

In some embodiments, the battery device may refer to an energy storage apparatus. The energy storage apparatus includes a box, and at least one side of the box is provided with a door. The energy storage apparatus includes an energy storage container, an energy storage cabinet, or the like.

As an example, the battery device includes a beam assembly and a battery cell assembly. The beam assembly may include a hanging beam and a mounting beam that are arranged with each other. The mounting beam is configured to mount and fix the battery cell assembly. The hanging beam is configured to mount the battery on an electric device body so that the battery supplies power to the electric device body. In some embodiments, the beam assembly may be a part of the structural member of the box.

Batteries have outstanding advantages such as high energy density, low environmental pollution, high power density, long service life, wide application range, and small self-discharge coefficient, and therefore are an important part of today's new energy development. The development of battery technology must consider multiple design factors, for example, performance parameters such as reliability, cycle life, discharge capacity, and charge-discharge rate. In addition, the energy density of the battery device also needs to be considered.

In battery technology, a battery cell assembly in a battery device generates a large amount of heat during continuous charge and discharge and use. In related arts, in order to reduce the safety hazards caused by internal temperature rise of the battery device during use, a thermal management component for heat exchange with the battery cell assembly is usually provided to regulate the temperature of battery cells, thereby alleviating the phenomenon of temperature rise inside the battery. However, a connection position between a joint of the thermal management component of the battery device and a pipeline for conveying a heat exchange medium is very prone to medium leakage during use in the related art, and the leaked medium comes into contact with a plurality of battery cells or other components in the battery cell assembly in a box. This easily causes the risk of corrosion of the battery cells or short circuit between a plurality of battery cells, resulting in low use reliability of the battery device. In addition, the joint also occupies the space required by the battery cell assembly, which is not conducive to the improvement of the volumetric energy density of the battery device.

In view of this, in order to alleviate the problems of low volumetric energy density of batteries caused by joints occupying space, and low battery reliability caused by easy leakage at the connection between joints and pipelines, some embodiments of the present application provide a battery device. The battery device includes a battery cell assembly, a beam assembly, and a thermal management component. The beam assembly includes a first mounting beam and a hanging beam that are connected to each other. The first mounting beam is configured to be connected to the battery cell assembly. The hanging beam is configured to connect the battery cell assembly to an electric device body. The thermal management component includes a body, a first lead-out portion, and a first joint. The body is configured to exchange heat with the battery cell assembly. The body is located on one side of the first mounting beam along a first direction x. The first joint is located on the other side of the first mounting beam along the first direction x. The first lead-out portion connects the body to the first joint. The beam assembly is provided with a first clearance portion, and the first lead-out portion passes through the first clearance portion.

In a battery with this structure, by providing the first clearance wall on the beam assembly for the first lead-out portion to pass through, the first joint is arranged on a side of the first mounting beam facing away from the battery cell group. On the one hand, when a medium leaks at a connection position between the first joint and the first lead-out portion, the phenomenon that the medium directly acts on the battery cell group can be alleviated, so as to reduce the risk that the battery cell assembly is corroded by the medium or experiences an internal short circuit, so that the battery device has high reliability. On the other hand, the first joint does not occupy the space where the battery cell assembly is located, and the first lead-out portion utilizes the space occupied by the beam assembly itself to connect to the first joint, which can reduce the space occupancy rate of the thermal management component, so that the battery has more space to accommodate the battery cell assembly, which helps to increase the volumetric energy density of the battery device.

The battery device disclosed in the embodiments of the present application can be used, but is not limited to, in electric devices such as vehicles, ships, or aircraft. A power supply system of the electric device can be composed of the battery device disclosed in the present application. This is beneficial to alleviating the problem of short circuit of the battery device during use, so as to improve the use reliability of the battery device, and also beneficial to improving the volumetric energy density of the battery device, so as to increase the working time of the electric device.

An embodiment of the present application provides an electric device using a battery device as a power source. The electric device may be, but is not limited to, a mobile phone, a tablet, a laptop computer, an electric toy, an electric tool, an electric bicycle, an electric car, a ship, a spacecraft, or the like. The electric toy may include a fixed or mobile electric toy, such as a game console, an electric car toy, an electric ship toy, and an electric airplane toy, or the like. The spacecraft may include an airplane, a rocket, a space shuttle, a spaceship, or the like.

For the convenience of description, the following embodiments take an electric device in an embodiment of the present application being a vehicle 1000 as an example for description.

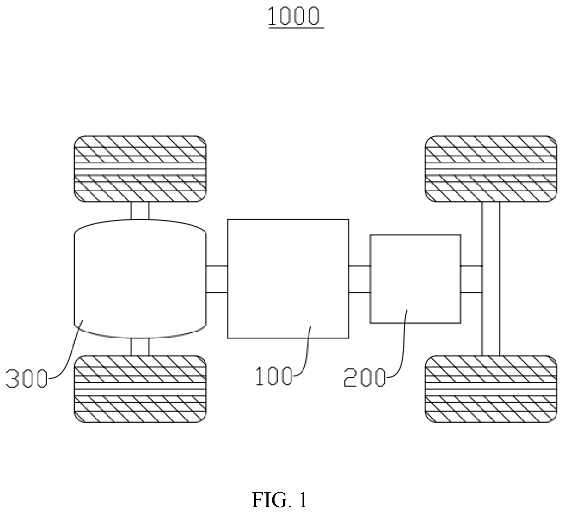

Referring to FIG. 1, FIG. 1 is a schematic structural diagram of a vehicle 1000 in some embodiments of the present application. The vehicle 1000 may be a fuel vehicle, a gas vehicle, or a new energy vehicle. The new energy vehicle may be a battery electric vehicle, a hybrid vehicle, an extended-range vehicle, or the like. A battery device 100 is arranged inside the vehicle 1000. The battery device 100 may be arranged at the bottom of the vehicle 1000, or at the head of the vehicle 1000, or at the tail of the vehicle 1000. The battery device 100 may be configured to supply power to the vehicle 1000. For example, the battery device 100 may be used as an operating power source or a power source for the vehicle 1000. The vehicle 1000 may further include a controller 200 and a motor 300. The controller 200 is configured to control the battery device 100 to supply power to the motor 300, for example, to meet the working power requirements for starting, navigation, and driving of the vehicle 1000.

In some embodiments of the present application, the battery device 100 can not only be used as an operating power source or a power source for the vehicle 1000, but also as a driving power source for the vehicle 1000 to replace or partially replace fuel or natural gas to provide driving power for the vehicle 1000.

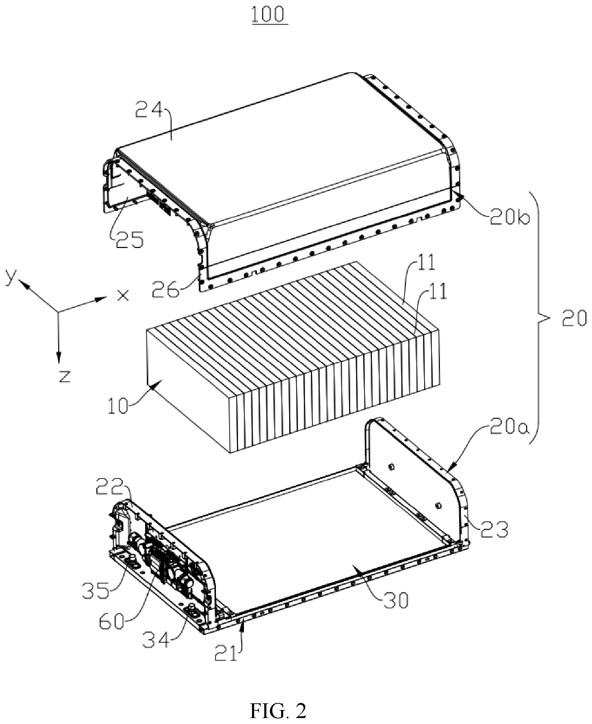

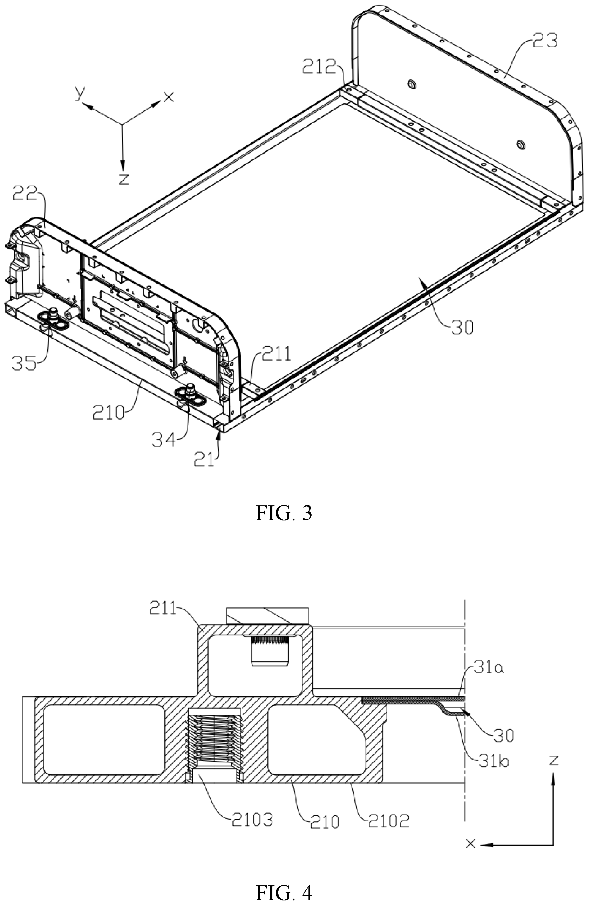

Some embodiments of the present application provide a battery device 100. Referring to FIGs. 2 to 4, FIG. 2 is an exploded perspective view of a battery device 100 in some embodiments of the present application. FIG. 3 is a schematic structural diagram of a beam assembly 21 and a thermal management component 30 in some embodiments of the present application. FIG. 4 is an internal schematic diagram of a partial structure of a beam assembly 21 in some embodiments of the present application.

The battery device 100 includes a battery cell assembly 10, a beam assembly 21, and a thermal management component 30. The beam assembly 21 includes a first mounting beam 211 and a hanging beam 210 that are connected to each other. The first mounting beam 211 is configured to be connected to the battery cell assembly 10. The hanging beam 210 is configured to connect the battery cell assembly 10 to an electric device body. The thermal management component 30 includes a body 31, a first lead-out portion 32, and a first joint 34. The body 31 is configured to exchange heat with the battery cell assembly 10. The body 31 is located on one side of the first mounting beam 211 along a first direction x. The first joint 34 is located on the other side of the first mounting beam 211 along the first direction x. The first lead-out portion 32 connects the body 31 to the first joint 34. The beam assembly 21 is provided with a first clearance portion 40, and the first lead-out portion 32 passes through the first clearance portion 40.

In some embodiments, the beam assembly 21 may be configured to support the weight of the battery cell assembly 10, the thermal management component 30, and other structures of the battery, and the battery device 100 can be assembled to the electric device body through the beam assembly 21 to transfer the overall weight of the battery to the electric device body.

The beam assembly 21 includes the first mounting beam 211 and the hanging beam 210 that are connected to each other, and the first mounting beam 211 is configured to be connected to the battery cell assembly 10 and can transfer the weight of the battery cell assembly 10 to the hanging beam 210. The hanging beam 210 is configured to be connected to the electric device body so as to transfer the overall weight of the battery to the electric device body. For example, the first mounting beam 211 and the hanging beam 210 are arranged along the direction of gravity. The first mounting beam 211 is located above the hanging beam 210. The battery cell assembly 10 is arranged on the first mounting beam 211 by welding, bonding, threaded member connection, or other connection manners. A hanging hole 2103 is formed on a lower surface of the hanging beam 210. The hanging beam 210 is mounted on a bracket of a body of the vehicle 1000 through the cooperation of a bolt and the hanging hole 2103.

In some embodiments, the beam assembly 21 may be an integrally formed structure. The first mounting beam 211 and the hanging beam 210 are manufactured via an integral molding process, such as an extrusion molding process, a die-casting molding process, a casting process, or other processes. In some other embodiments, the beam assembly 21 may be connected to a plurality of structural members to form an overall structural member. For example, the first mounting beam 211 and the hanging beam 210 are separate structures, and the connection relationship between the two includes but is not limited to welding, riveting, clamping, threaded member connection, or other connection relationships.

In some embodiments, the beam assembly 21 may be a frame structure configured to support the battery cell assembly 10 and mount the battery on the electric device body.

In some embodiments, the beam assembly 21 may be a part of the structure of the box 20. For example, the battery includes a box 20. The box 20 is configured to provide an accommodating cavity for the battery cell assembly 10. The box 20 may adopt a variety of structures. Optionally, as shown in FIG. 2, the box 20 may include a first box body 20a and a second box body 20b. The first box body 20a and the second box body 20b fit each other. The first box body 20a and the second box body 20b together define an accommodating cavity for accommodating the battery cell assembly 10. The beam assembly 21 is a part of the structure of the first box body 20a. Optionally, the structures of the first box body 20a and the second box body 20b may be various. For example, in FIG. 2, both the first box body 20a and the second box body 20b are "U"-shaped structures, so that the first box body 20a and the second box body 20b fit each other and can together define an accommodating cavity. Certainly, in some other embodiments, the first box body 20a may alternatively be a hollow structure with one end open, and the second box body 20b may be a plate-shaped structure. The second box body 20b covers the open side of the first box body 20a so that the first box body 20a and the second box body 20b together define an accommodating cavity. The first box body 20a and the second box body 20b may alternatively be hollow structures with one side open. The open side of the first box body 20a covers the open side of the second box body 20b. Certainly, the box 20 formed by the first box body 20a and the second box body 20b may have a variety of shapes, such as a cylinder, a cuboid, or a cube. For example, in FIG. 2, the shape of the box 20 formed by the first box body 20a and the second box body 20b is a cuboid.

In the battery device 100, one or more battery cell assemblies 10 may be arranged in the box 20. Each battery cell assembly 10 may include one or more battery cells 11. When a plurality of battery cells 11 are included, the plurality of battery cells 11 may be connected in series, parallel, or a mixture of series and parallel. A mixture of series and parallel means that there are both series and parallel connections among the plurality of battery cells 11.

When there are a plurality of battery cell assemblies 10 arranged in the box 20, the plurality of battery cell assemblies 10 may be connected in series, parallel, or a mixture of series and parallel. A mixture of series and parallel means that there are both series and parallel connections among the plurality of battery cell assemblies 10. In some embodiments, the battery device 100 may further include other structures. For example, the battery may further include a busbar member. The busbar member is configured to connect a plurality of battery cell assemblies 10 to realize electrical connection between the plurality of battery cell assemblies 10. The battery device 100 may further include a thermal management component 30. The thermal management component 30 may exchange heat with the battery cell assembly 10 to regulate the temperature of the battery cell assembly 10. The battery device 100 may further include a connector. The connector can electrically connect the battery cell assembly 10 to the outside to realize the input and output of electric energy.

Each battery cell 11 may be a secondary battery or a primary battery. It may alternatively be a lithium-sulfur battery, a sodium-ion battery, or a magnesium-ion battery, but is not limited thereto. Optionally, the shape of the battery cell 11 may be various. For example, the battery cell 11 may have a shape of a cuboid, a cylinder, a prism, or other shapes. For example, in FIG. 2, the battery cell 11 has a cuboid structure.

In some embodiments, the battery cell assembly 10 includes a plurality of stacked battery cells 11 and end plates. Along a stacking direction of the battery cells 11, two end plates are respectively arranged at two ends of the plurality of battery cells 11 and cooperate with side plates to fix the plurality of battery cells 11 into a whole. In these embodiments, the first mounting beam 211 may be connected to the end plates. The connection relationship between the first mounting beam 211 and the end plates includes but is not limited to bonding, welding, clamping, threaded member connection, or other connection relationships. Generally, the first mounting beam 211 includes the function of fixing the battery cells 11, and further includes the function of defining the position of the battery cells 11 and reducing external impacts imposed on the battery cells 11. Referring to FIGs. 2 and 3, along the first direction x, the battery cell assembly 10 is located on one side of the first mounting beam 211. The first mounting beam 211 can define the position of the battery cell assembly 10 in the first direction x and reduce the influence of impact on the battery cell assembly 10 from the other side of the first mounting beam 211. Optionally, the beam assembly 21 includes the first mounting beam 211 and a second mounting beam 212. The first mounting beam 211 and the second mounting beam 212 are spaced apart along the first direction x. The first mounting beam 211 is connected to the end plate on one side of the battery cell assembly 10, and the second mounting beam 212 is connected to the end plate on the other side of the battery cell assembly 10.

The thermal management component 30 is configured to exchange heat with the battery cell assembly 10 to regulate the temperature of the battery cells 11 in the battery cell assembly 10, so that the battery cells 11 are within a suitable temperature range to have good charge and discharge performance. Generally, the thermal management component 30 has a flow channel inside. The flow channel is configured to accommodate a medium so that the medium can exchange heat with the battery cell assembly 10 to manage the temperature of the battery cells 11. Optionally, the medium may be a fluid, and the fluid may be a liquid or a gas. For example, the medium may be a gas, such as air or hydrogen. The heat exchange medium may alternatively be a liquid, such as water, brine solution, or liquid nitrogen.

In some embodiments, the thermal management component 30 has a joint. The joint can connect the thermal management component 30 to an external medium circulation device. For example, the thermal management component 30 includes a first joint 34 and a second joint 35. The first joint 34 and the second joint 35 are connected to a water tank of the vehicle 1000 through joints and pipelines. The water tank of the vehicle 1000 provides a medium to the thermal management component 30 through the first joint 34 or the second joint 35. The medium then flows back to the water tank through the second joint 35 or the first joint 34, so that the medium circulates.

In some embodiments of the present application, the thermal management component 30 includes the body 31 and a lead-out portion. The lead-out portion may include a first lead-out portion 32 and a second lead-out portion 33. The first lead-out portion 32 is configured to connect the body 31 to the first joint 34. The second lead-out portion 33 is configured to connect the body 31 to the second joint 35. In some embodiments of the present application, the description is mainly based on the first lead-out portion 32 and the first joint 34. To understand the features of the second lead-out portion 33 and the first joint 34 and the features of the second lead-out portion 33 and the first joint 34, reference can be made to the first lead-out portion 32 and the first joint 34.

Along the first direction x, the body 31 and the battery cell assembly 10 are arranged on the same side relative to the first mounting beam 211. For example, the body 31 may be arranged below the battery cell assembly 10, and has the function of supporting the battery cell assembly 10 and regulating the battery cell assembly 10. Optionally, the body 31 is connected to the beam assembly 21 and is located between the first mounting beam 211 and the second mounting beam 212. The body 31 can be regarded as the bottom of the first box body 20a, supporting the battery cell assembly 10. A medium located inside the body 31 can exchange heat with the battery cell assembly 10 to regulate the temperature of the battery cell assembly 10. Optionally, in some embodiments where the beam assembly 21 is a part of the structure of the first box body 20a, the thermal management component 30 and the beam assembly 21 can be integrated into a whole and used together as the bottom of the first box body 20a to jointly support the battery cell assembly 10. The body 31 of the thermal management component 30 is located in the accommodating cavity.

Along the first direction x, the joint and the body 31 are respectively located on two sides of the first mounting beam 211. It can be understood that the body 31 and the battery cell assembly 10 are located on the inner side of the first mounting beam 211, and the joint (such as the first joint 34 and the second joint 35) is located on the outer side of the first mounting beam 211. Alternatively, it can be understood that the body 31 and the battery cell assembly 10 are located inside the box 20, that is, inside the accommodating cavity, and the joint (such as the first joint 34 and the second joint 35) is located outside the box 20, that is, outside the accommodating cavity.

The first lead-out portion 32 is a structural member connecting the body 31 to the first joint 34, and is used for a medium to enter the body 31 from the first joint 34 or for a medium to flow out from the body 31 to the first joint 34. For example, the first lead-out portion 32 is a plate-shaped structure, and its size in the second direction y is smaller than the size of the body 31. For example, it can be tongue-shaped. The first direction x and the second direction y are perpendicular to each other. Optionally, the plane formed by the first direction x and the second direction y together may be the support plane offered by the beam assembly 21 for the battery cell assembly 10. The first direction x and the second direction y may be perpendicular to the direction of gravity respectively. The first mounting beam 211 and the hanging beam 210 may be arranged along the third direction z. The third direction z may be parallel to the direction of gravity. As another example, the first lead-out portion 32 may be tubular, with one end connected to the body 31 and the other end connected to the first joint 34.

The second lead-out portion 33 is a structural member connecting the body 31 to the second joint 35, and is used for a medium to enter the body 31 from the second joint 35 or for a medium to flow out from the body 31 to the second joint 35. For example, the first lead-out portion 32 is a plate-shaped structure or the first lead-out portion 32 may be tubular, with one end connected to the body 31 and the other end connected to the second joint 35.

In some embodiments, the first lead-out portion 32, the first joint 34, and the body 31 may be an integrally formed structure. In some other embodiments, the first lead-out portion 32 and the first joint 34 may be an integral structure. The first lead-out portion 32 and the body 31 may be mutually separate structures. The mutually separate structures may be connected to each other by welding, clamping, plugging, riveting, bonding, or threaded member connection. In some other embodiments, the first lead-out portion 32, the first joint 34, and the body 31 are three mutually separate structures. The mutually separate structures may be connected to each other by welding, clamping, plugging, riveting, bonding, or threaded member connection.

"The beam assembly 21 is provided with a first clearance portion 40, and the first lead-out portion 32 passes through the first clearance portion 40" can be understood as that the first clearance portion 40 is provided on the beam assembly 21 to provide space for the first lead-out portion 32, so as to avoid the first lead-out portion 32, so that the first lead-out portion 32 has a part on one side of the first mounting beam 211 to connect to the body 31, a part in the first clearance portion 40 of the first mounting beam 211, and the remaining part located on the other side of the first mounting beam 211 to connect to the first joint 34.

For example, when observing the beam assembly 21 and the first lead-out portion 32 along the second direction y, a part of the first lead-out portion 32 can be blocked by the beam assembly 21. That is, on a same projection plane perpendicular to the second direction y, an orthographic projection of the first lead-out portion 32 and an orthographic projection of the beam assembly 21 at least partially overlap.

Optionally, the first clearance portion 40 may be provided on the first mounting beam 211. For example, the first mounting beam 211 is provided with the first clearance portion 40. The first clearance portion 40 may be a groove-shaped structure recessed toward the hanging beam 210, or the first clearance portion 40 may be a through-hole structure formed on the first mounting beam 211. The through-hole structure allows the first lead-out portion 32 to pass through.

Optionally, the first clearance portion 40 may be provided on the hanging beam 210. For example, the hanging beam 210 is provided with the first clearance portion 40. The first clearance portion 40 may be a through-hole structure running through the hanging beam 210 for the first lead-out portion 32 to pass through, or the hanging beam 210 and the first mounting beam 211 are separate structures. A surface of the hanging beam 210 facing towards the first mounting beam 211 is recessed in a direction leaving the first mounting beam 211 to form a groove-shaped structure for the first lead-out portion 32 to pass through.

Optionally, one part of the first clearance portion 40 is formed on the first mounting beam 211, and the other part is formed on the hanging beam 210. For example, the first clearance portion 40 is a hole-shaped structure. The hole-shaped structure is enclosed by the first mounting beam 211 and the hanging beam 210, or a part of the hole-shaped structure is located on the first mounting beam 211 and the other part is located on the hanging beam 210.

Optionally, the beam assembly 21 may alternatively be provided with other clearance structures for the second lead-out portion 33 to pass through to connect the second joint 35 to the body 31.

In the above solution, by providing the first clearance wall on the beam assembly 21 for the first lead-out portion 32 to pass through, the first joint 34 is arranged on the side of the first mounting beam 211 facing away from the battery cell 11 group. On the one hand, when a medium leaks at the connection position between the first joint 34 and the first lead-out portion 32, the phenomenon that the medium directly acts on the battery cell 11 group can be alleviated, so as to reduce the risk that the battery cell assembly 10 is corroded by the medium or experiences an internal short circuit, so that the battery device 100 has high reliability. On the other hand, the first joint 34 does not occupy the space where the battery cell assembly 10 is located, and the first lead-out portion 32 utilizes the space occupied by the beam assembly 21 itself to connect to the first joint 34. This can reduce the space occupancy rate of the thermal management component 30, so that the battery has more space to accommodate the battery cell assembly 10, which helps to increase the volumetric energy density of the battery device 100.

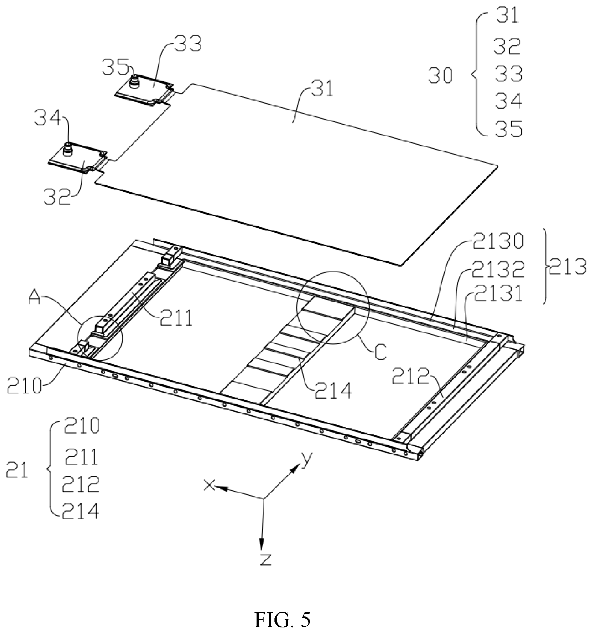

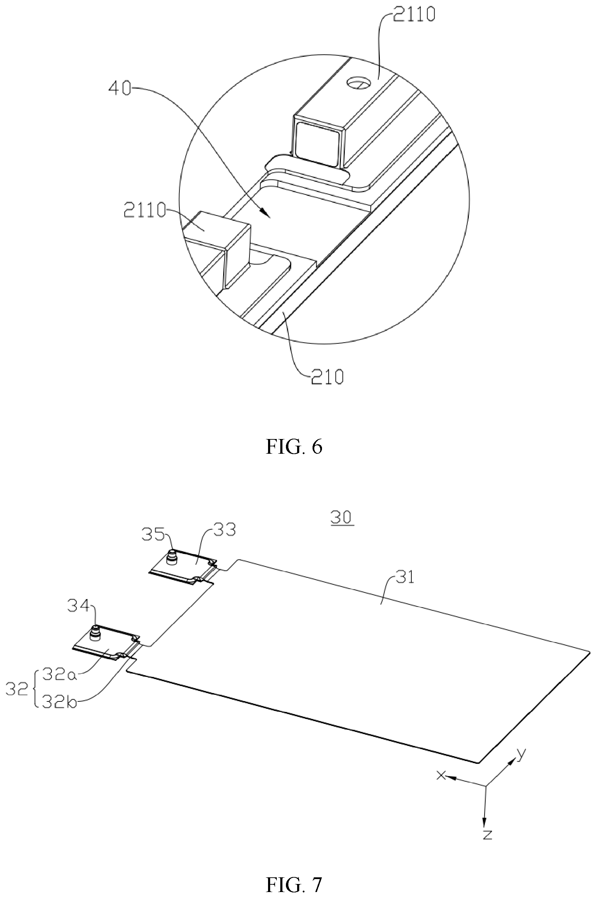

According to some embodiments of the present application, referring to FIGs. 5 and 6, FIG. 5 is an exploded perspective view of the beam assembly 21 and the thermal management component 30 in some embodiments of the present application. FIG. 6 is an enlarged view of portion A in FIG. 5. The first clearance portion 40 is provided on the first mounting beam 211.

In some embodiments, the first clearance portion 40 is arranged on the first mounting beam 211 so that the first lead-out portion 32 can utilize the space of the first mounting beam 211 in the third direction z.

In some embodiments, the first clearance portion 40 may be a groove-shaped structure or a through-hole-shaped structure on the first mounting beam 211. For example, the first clearance portion 40 is through-groove shaped to communicate with two sides of the first mounting beam 211, so as to allow the first lead-out portion 32 to pass through.

In some embodiments, on a same projection plane perpendicular to the second direction y, an orthographic projection of the first lead-out portion 32 and an orthographic projection of the first mounting beam 211 at least partially overlap.

In some embodiments, the third direction z is the direction of gravity. The first mounting beam 211 is located above the hanging beam 210. The first joint 34 and the body 31 are respectively located on two opposite sides of the first mounting beam 211 along the first direction x. Both the first joint 34 and the body 31 are located above the hanging beam 210. The first lead-out portion 32 can extend in the horizontal direction and pass through the first clearance portion 40 arranged on the first mounting beam 211 to connect the body 31 to the first joint 34.

In the above solution, by arranging the first clearance portion 40 on the first mounting beam 211, the interference of the hanging beam 210 with the thermal management component 30 can be reduced, thereby reducing the difficulty of assembling the thermal management component 30 to the beam assembly 21 and reducing the pass-through difficulty of the first lead-out portion 32, so that the first lead-out portion 32 can quickly connect the body 31 to the first joint 34, which further helps to improve the manufacturing efficiency of the battery device 100.

According to some embodiments of the present application, referring to FIG. 6, the first clearance portion 40 is a first clearance groove. The first clearance groove is formed by a side of the first mounting beam 211 facing away from the hanging beam 210 recessing toward the hanging beam 210.

The first clearance portion 40 is the first clearance groove. Along the third direction z, a notch of the first clearance groove may be arranged toward a side facing away from the hanging beam 210. The first clearance groove runs through two opposite sides of the first mounting beam 211 along the first direction x. For example, the first clearance groove runs through along the first direction x, or the first clearance groove runs through the first mounting beam 211 along a direction inclined to the first direction x.

In some embodiments, the notch size of the first clearance groove may be slightly larger than the size of the first lead-out portion 32 corresponding to the first clearance groove, so as to allow the first lead-out portion 32 to be arranged in the first clearance groove in the direction from the first mounting beam 211 to the hanging beam 210. For example, referring to FIG. 7, FIG. 7 is a schematic diagram of the thermal management component 30 in some embodiments of the present application. The first lead-out portion 32 includes a first part 32a and a second part 32b. Along the first direction x, the first part 32a is located on a side of the mounting beam facing away from the battery cell 11 group. The second part 32b connects the body 31 to the first part 32a. The maximum size of the first part 32a along the second direction y is greater than the maximum size of the second part 32b along the second direction y, that is, a constriction is formed between the first part 32a and the body 31. The constricted part corresponds to the second part 32b. The second part 32b is arranged in the first clearance groove. Such a design can make the size of the first clearance groove along the second direction y smaller, so as to reduce the influence on the structural strength of the first mounting beam 211 caused by the arrangement of the first clearance groove. In addition, a larger first part 32a can allow for effective arrangement of the first joint 34.

Optionally, the first mounting beam 211 may include a plurality of spaced sub-structures 2110. A gap between two adjacent sub-structures 2110 may form the first clearance groove.

Optionally, an extrusion process, a slotting process, or other processes may be used to slot a complete first mounting beam 211 to form the first clearance groove.

In the above solution, by setting the first clearance portion 40 as the first clearance groove, on the one hand, the molding difficulty of the first clearance portion 40 can be reduced and the manufacturing efficiency of the battery device 100 can be improved. On the other hand, the first lead-out portion 32 can be directly arranged in the first clearance groove from the notch of the first clearance groove to connect the body 31 to the first joint 34, which is beneficial to the improvement of battery manufacturing efficiency.

According to some embodiments of the present application, referring to FIG. 7, the first lead-out portion 32 is integrally formed with the body 31.

In some embodiments, the first lead-out portion 32 and the body 31 are integrally formed structural members. Optionally, the thermal management component 30 may include a body and a joint. The body includes two stacked plates. The plate includes a part of the body 31 and a part of the first lead-out portion 32. The two plates are stacked with each other to jointly constitute the body 31 and the first lead-out portion 32. The plate can be manufactured by die-casting, extrusion, or casting processes.

In some embodiments, along the third direction z, an opening is formed on the side of the first lead-out portion 32 facing away from the hanging beam 210. The first joint 34 is arranged in the opening to communicate with the flow channel inside the body 31 through the first lead-out portion 32.

In the above solution, the first lead-out portion 32 and the body 31 are manufactured via an integral molding process, on the one hand, the thermal management component 30 can have high integration, high manufacturing efficiency, and reduced number of parts, which is beneficial to the improvement of battery manufacturing efficiency. On the other hand, the thermal management component 30 can have high structural strength, which can effectively reduce the risk of leakage of the thermal management component 30, thereby helping to improve the thermal management efficiency of the thermal management component 30 for the battery cell assembly 10, and helping to improve battery reliability.

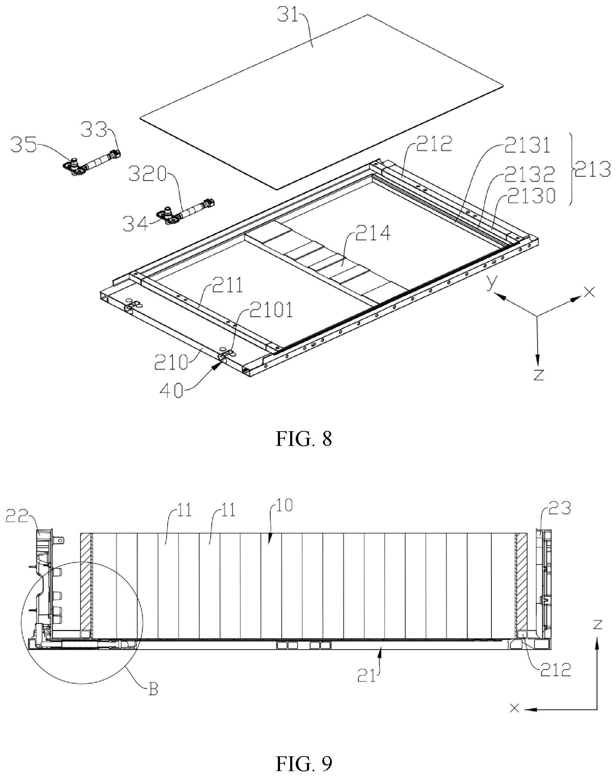

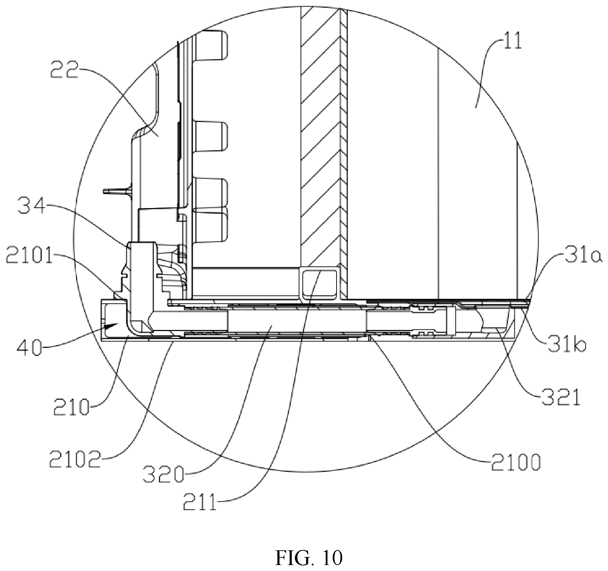

According to other embodiments of the present application, referring to FIGs. 8 to 10, FIG. 8 is an exploded perspective view of the beam assembly 21 and the thermal management component 30 in some other embodiments of the present application. FIG. 9 is an internal schematic diagram of a partial structure of the battery device 100 in some other embodiments of the present application. FIG. 10 is an enlarged view of portion B in FIG. 9. The first clearance portion 40 is provided on the hanging beam 210.

In some embodiments, by arranging the first clearance portion 40 on the hanging beam 210, the first lead-out portion 32 can utilize the space of the hanging beam 210 in the third direction z.

In some embodiments, the first clearance portion 40 may be a groove-shaped structure or a through-hole-shaped structure arranged on the hanging beam 210. For example, the first clearance portion 40 is through-hole shaped to run through the hanging beam 210, so as to allow the first lead-out portion 32 to pass through.

In some embodiments, on a same projection plane perpendicular to the second direction y, an orthographic projection of the first lead-out portion 32 and an orthographic projection of the hanging beam 210 at least partially overlap.

In the above solution, by arranging the first clearance portion 40 on the hanging beam 210, on the one hand, the first lead-out portion 32 can appropriately utilize the space where the hanging beam 210 is located. On the other hand, the influence on the structural strength of the first mounting portion caused by the arrangement of the first clearance portion 40 can be reduced, so that the first mounting portion can effectively fix the battery cell assembly 10, and the battery device 100 has high reliability.

According to some embodiments of the present application, at least part of the first lead-out portion 32 is embedded in the hanging beam 210.

In some embodiments, the first clearance portion 40 may be a first clearance hole. The first clearance hole can accommodate at least part of the first lead-out portion 32. For example, one end of the first lead-out portion 32 is located outside the first clearance hole to be able to connect to the body 31. A part of the first lead-out portion 32 is located in the first clearance hole. The other end of the first lead-out portion 32 is located outside the first clearance hole to connect to the first joint 34.

Optionally, the first clearance hole is formed inside the hanging beam 210. Along the first direction x, a side of the hanging beam 210 facing towards the battery cell assembly 10 is formed with a first opening 2100. The first opening 2100 communicates with the first clearance hole for an end portion of the first lead-out portion 32 to pass through so as to connect to the body 31. Along the third direction z, a surface of the hanging beam 210 facing towards the first mounting beam 211 is formed with a second opening 2101. The second opening 2101 communicates with the first clearance hole for an end portion of the first lead-out portion 32 to pass through so as to connect to the first joint 34.

In the above solution, by setting at least part of the first lead-out portion 32 to be embedded in the hanging beam 210, on the one hand, the assembly and positioning of the first lead-out portion 32 can be realized, and the assembly efficiency of the first lead-out portion 32 can be improved, thereby helping to improve the battery manufacturing efficiency. On the other hand, the hanging beam 210 can play a role in protecting the first lead-out portion 32, thereby reducing the risk that structure damage caused by impact on the first lead-out portion 32 results in medium leakage that affects the thermal management efficiency of the battery cell assembly 10, and helping to improve battery reliability. On yet another aspect, the first lead-out portion 32 can effectively utilize the space where the hanging beam 210 is located, so that the battery structure is compact, which helps to increase the volumetric energy density of the battery.

According to some embodiments of the present application, referring to FIGs. 8 and 9, the first lead-out portion 32 is connected to a side of the body 31 facing away from the battery cell assembly 10.

In some embodiments, along the third direction z, the body 31 has a first surface 31a and a second surface 31b that are opposite to each other. The first surface 31a can be configured to support the battery cell assembly 10. The second surface 31b is a surface of the body 31 facing away from the battery cell assembly 10. The first lead-out portion 32 can be connected to the second surface 31b.

Optionally, in some other embodiments, under the condition that the thickness of the body 31 is satisfied, the first lead-out portion 32 may alternatively be connected to an outer peripheral surface of the body 31, that is, the connection position of the first lead-out portion 32 is between the first surface 31a and the second surface 31b.

In the above solution, by setting the first lead-out portion 32 to be connected to the side of the body 31 facing away from the battery cell assembly 10, the first lead-out portion 32 is far away from the battery cell 11 group. On the one hand, this can reduce the risk that the first lead-out portion 32 interfering with the battery cell 11 group results in high assembly difficulty of the thermal management component 30 and affects battery manufacturing efficiency. On the other hand, this can reduce the occupation of the space where the battery cell assembly 10 is located by the first lead-out portion 32, which helps to increase the volumetric energy density of the battery. On yet another aspect, both the first joint 34 and the first lead-out portion 32 can be far away from the battery cell 11, so that when a medium leaks from the first joint 34 or the first lead-out portion 32, the risk that the medium affects the battery cell assembly 10 can be effectively reduced, and thus the battery device 100 has high reliability.

According to other embodiments of the present application, referring to FIGs. 8 and 10, the first lead-out portion 32 includes an adapter tube 320 and an adapter joint 321. The adapter joint 321 is arranged on the side of the body 31 facing away from the battery cell assembly 10. The adapter tube 320 connects the adapter joint 321 to the first joint 34. At least part of the adapter tube 320 is embedded in the hanging beam 210.

In some embodiments, the first lead-out portion 32 includes the adapter tube 320 and the adapter joint 321. Both the adapter tube 320 and the adapter joint 321 are provided with flow channels to realize the input or output of the medium. The adapter tube 320 is configured as a tubular column. Optionally, the adapter tube 320 may be a circular tube, square tube, thin-plate tube, or the like.

In some embodiments, the main part of the adapter tube 320 may be located in the first clearance hole. One end of the adapter tube 320 may be connected to the first joint 34, and the other end is connected to the adapter joint 321. The adapter joint 321 may be a structural member arranged on the second surface 31b of the body 31.

In some embodiments, the adapter tube 320 and the hole wall of the first clearance hole may be fixed by bonding, welding, clamping, or other manners. Alternatively, in some embodiments, there is no connection relationship between the adapter tube 320 and the first clearance hole. The adapter tube 320 can be directly pulled out of the first clearance hole.

The connection relationship between the adapter tube 320 and the adapter joint 321 includes but is not limited to welding, bonding, plugging, threaded member connection, or other connection manners.

The connection relationship between the adapter tube 320 and the first joint 34 includes but is not limited to welding, bonding, plugging, threaded member connection, or other connection manners, or the adapter tube 320 and the first joint 34 are an integrally formed structure.

The connection relationship between the adapter joint 321 and the body 31 includes but is not limited to welding, bonding, plugging, threaded member connection, or other connection manners, or the adapter joint 321 and the body 31 are an integrally formed structure.

For example, the adapter joint 321 protrudes from the second surface 31b of the body 31 along a direction leaving the first surface 31a. Along the first direction x, an opening of the adapter joint 321 is arranged facing toward the first joint 34. The first clearance hole extends along the first direction x. The adapter tube 320 is arranged in the first clearance groove. One end of the adapter tube 320 is plugged into the opening of the adapter joint 321. The other end of the adapter tube 320 is bent along the third direction z and integrally formed with the first joint 34.

In the above solution, the first lead-out portion 32 includes the adapter tube 320 and the adapter joint 321 that are mated with each other. The adapter tube 320 connects the adapter joint 321 to the first joint 34 to provide an external medium to the flow channel in the body 31, which can reduce the assembly difficulty of the thermal management component 30, improve the maintenance efficiency of the thermal management component 30, and reduce the maintenance cost.

According to other embodiments of the present application, referring to FIG. 10, along a direction from the first mounting beam 211 to the hanging beam 210, the adapter joint 321 does not exceed a surface of the hanging beam 210 facing away from the first mounting beam 211.

In some embodiments, along the third direction z, the hanging beam 210 has a third surface 2102 facing away from the first mounting beam 211. The adapter joint 321 is located on a side of the body 31 facing away from the battery cell 11 and does not exceed the third surface 2102. When the third direction z is the direction of gravity, the third surface 2102 may be the lowest surface of the battery device 100, that is, the adapter joint 321 does not exceed the lowest surface of the battery device 100.

Optionally, the adapter joint 321 may be between the third surface 2102 and the second surface 31b, or an end portion of the adapter joint 321 facing away from the second surface 31b may be flush with the third surface 2102.

In the above solution, setting the adapter joint 321 so as not to exceed the surface of the hanging beam 210 facing away from the first mounting beam 211, on the one hand, can reduce the risk that exposure of the adapter joint 321 results in low battery space utilization and affects the volumetric energy density of the battery. On the other hand, the hanging beam 210 can protect the adapter joint 321, and thus reduce the risk that structural damage caused by external impact on the adapter joint 321 leads to medium leakage, so that the battery has high reliability.

According to some embodiments of the present application, the first lead-out portion 32 extends along the first direction x.

In some embodiments, the first lead-out portion 32 extends along the first direction x, that is, the long axis of the first lead-out portion 32 is parallel to the first direction x. Optionally, referring to FIGs. 5 and 7, the first lead-out portion 32 is tongue-shaped, and its length direction or the direction in which it passes through the first clearance groove is the first direction x. Optionally, referring to FIG. 8, the first lead-out portion 32 includes the adapter tube 320. The axis of the adapter tube 320 may be the first direction x.

In the above solution, by setting the first lead-out portion 32 to extend along the first direction x, the occupation of the internal space of the battery by the first lead-out portion 32 can be reduced, and the efficiency of the first lead-out portion 32 passing through the beam assembly 21 can be improved. On the one hand, the problem of high leakage risk caused by the oversized first lead-out portion 32 is alleviated. On the other hand, the thermal management component 30 can have a compact structure, which helps to increase the volumetric energy density of the battery.

In some other embodiments, the first lead-out portion 32 extends in a direction inclined to the first direction x, that is, the long axis of the first lead-out portion 32 is inclined to the first direction x.

According to some embodiments of the present application, referring to FIG. 5, the first mounting beam 211 extends along a second direction y. The first mounting beam 211 and the hanging beam 210 are arranged along a third direction z. The first direction x, the second direction y, and the third direction z are perpendicular to each other.

In some embodiments, an outer contour of the battery device 100 may be cuboid. The third direction z may be the height direction of the battery device 100. The first direction x may be the length direction of the battery device 100. The second direction y may be the width direction of the battery device 100.

For example, the beam assembly 21 includes the first mounting beam 211 and a second mounting beam 212. The first mounting beam 211 and the second mounting beam 212 are spaced apart along the first direction x. The first mounting beam 211 and the second mounting beam 212 respectively extend along the second direction y. The battery cell assembly 10 is arranged between the first mounting beam 211 and the second mounting beam 212, and two end plates of the battery cell assembly 10 are respectively connected to the first mounting beam 211 and the second mounting beam 212. Along the third direction z, the hanging beam 210 is located on the side of the first mounting beam 211 and the second mounting beam 212 facing away from the battery cell assembly 10.

According to some embodiments of the present application, the hanging beam 210 is integrally formed with the first mounting beam 211, or the hanging beam 210 and the first mounting beam 211 are separate structures.

In some embodiments, the beam assembly 21 may be an integrally formed structure, or a part of the structure of the beam assembly 21 may be an integrally formed structure, or the beam assembly 21 is composed of various parts connected to each other.

Optionally, the hanging beam 210 and the first mounting beam 211 are manufactured via an integral molding process, for example, an extrusion process, a die-casting process, or a casting process.

Optionally, the hanging beam 210 and the first mounting beam 211 are separate structures. The connection relationship between the two includes but is not limited to bonding, welding, riveting, clamping, threaded member connection, or other connection relationships.

In the above solution, in some embodiments, the hanging beam 210 and the first mounting beam 211 are manufactured via an integral molding process, so that the hanging beam 210 and the first mounting beam 211 have high structural strength, which can improve the structural reliability of the battery and facilitate the stable mounting of the battery on the electric device body. In some embodiments, by setting the hanging beam 210 and the first mounting beam 211 as mutually independent separate structures, the manufacturing difficulty of the beam assembly 21 can be reduced, and the maintenance cost of the beam assembly 21 can be reduced.

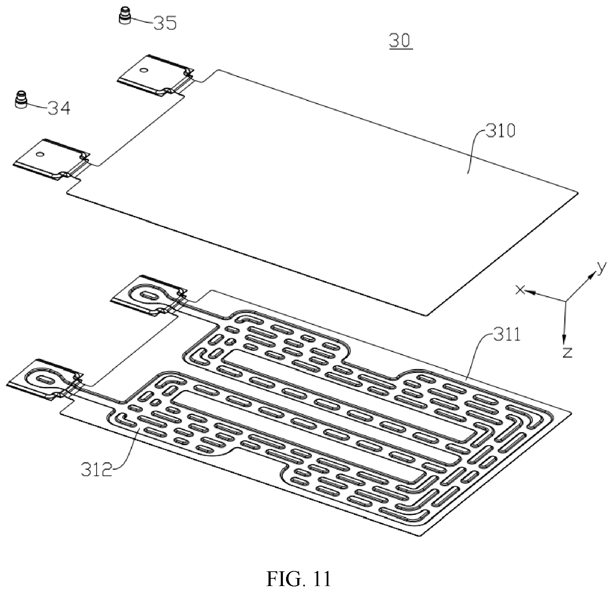

According to some embodiments of the present application, referring to FIG. 11, FIG. 11 is an exploded perspective view of a thermal management component 30 in some embodiments of the present application. The body 31 includes a first plate body 310 and a second plate body 311. The first plate body 310 and the second plate body 311 are stacked and together form a first flow channel 312 for accommodating a medium.

In some embodiments, the first plate body 310 and the second plate body 311 are stacked and connected along the third direction z. The connection relationship between the first plate body 310 and the second plate body 311 includes but is not limited to welding, bonding, threaded member connection, or the like. In some embodiments, in order to reduce the risk of medium leakage, a sealing member may be provided at the connection position between the first plate body 310 and the second plate body 311.

In some embodiments, the materials of the first plate body 310 and the second plate body 311 may be the same or different. Optionally, the materials of the first plate body 310 and the second plate body 311 are aluminum alloy, aluminum, stainless steel, or other materials respectively.

The first plate body 310 and the second plate body 311 together define the first flow channel 312. The first flow channel 312 can accommodate a medium, and heat is exchanged between the medium and the battery cell assembly 10. In some embodiments, a second flow channel is formed in the first lead-out portion 32. The second flow channel communicates with the first flow channel. A third flow channel is formed in the second lead-out portion 33. The third flow channel communicates with the first flow channel 312. Optionally, a medium in an external pipeline can enter the first flow channel from the first joint 34 and the second flow channel, and be discharged through the third flow channel and the second joint 35.

In some embodiments, along the third direction z, the first plate has a first plane facing towards the second plate body 311. A groove is provided on a side of the second plate body 311 facing towards the first plate body 310. A groove wall surface of the groove and the first plane together define the first flow channel 312. The groove wall surface of the groove and the first plane together defining the first flow channel 312 means that the first plane covers a notch of the groove, so that the first flow channel 312 is formed between the first plane and the groove wall surface of the groove. That is to say, the first flow channel 312 is formed in a region that is in the thermal management component 30 and that corresponds to the groove. The first plane is a flat and contiguous surface. The first plane is perpendicular to the third direction z.

In some embodiments, the groove on the second plate body 311 may be formed by a stamping process in a later stage, or the second plate body 311 may be manufactured by die-casting or casting to form the groove synchronously.

In an embodiment where the first lead-out portion 32 and the body 31 are integrally formed structural members, a part of the first plate body 310 and a part of the second plate body 311 form the body 31. A part of the first plate body 310 and a part of the second plate body 311 form the first lead-out portion 32. The groove on the second plate body 311 forms a second flow channel after the second plate body 311 is covered.

It should be noted that the structure of the body 31 is not limited to this. In some other embodiments, the body 31 may alternatively have other structures. For example, it may alternatively be that the second plate body 311 may have a first plane facing towards the first plate body 310. A groove is provided on a side of the first plate body 310 facing towards the second plate body 311. A groove wall surface of the groove and the first plane together define the first flow channel 312. It may alternatively be that both the side of the first plate body 310 facing towards the second plate body 311 and the side of the second plate body 311 facing towards the first plate body 310 are provided with grooves, and the groove of the first plate body 310 and the groove of the second plate body 311 are arranged opposite in the third direction z, so that the groove wall surface of the groove of the first plate body 310 and the groove wall surface of the groove of the second plate body 311 together define the first flow channel 312.

In some embodiments, along the third direction z, a protrusion is formed on the side of the second plate body 311 facing away from the first plate body 310 and at the position corresponding to the groove. For example, the groove provided on the side of the second plate body 311 facing towards the first plate body 310 is formed by a stamping process to form the groove on the side of the second plate body 311 facing towards the first plate body 310 and to form the protrusion on the side of the second plate body 311 facing away from the first plate body 310 and at the position corresponding to the groove. Certainly, the processing manner of the groove provided on the side of the second plate body 311 facing towards the first plate body 310 is not limited to this. In some other embodiments, the groove provided on the side of the second plate body 311 facing towards the first plate body 310 can alternatively be formed by casting, milling, etching, or other processing processes.

In some embodiments, along the third direction z, the second plate body 311 is located on the side of the first plate body 310 facing away from the battery cell assembly 10. That is to say, in the third direction z, the second plate body 311 and the battery cell assembly 10 are respectively located on two sides of the first plate body 310.

In the above solution, the body 31 has a simple structure and is easy to process and manufacture. The body 31 includes the first plate body 310 and the second plate body 311 that are stacked, and the first plate body 310 and the second plate body 311 together define a first flow channel 312 for accommodating a medium to achieve heat exchange with the battery cell assembly 10, so that the battery is at a suitable temperature to have good charge and discharge performance.

According to some embodiments of the present application, referring to FIG. 4, along the third direction z, a side of the hanging beam 210 facing away from the mounting beam is formed with a hanging hole 2103. The third direction z is parallel to the arrangement direction of the hanging beam 210 and the mounting beam.

In some embodiments, a side of the hanging beam 210 facing away from the mounting beam is formed with a hanging hole 2103 for cooperating with a mounting member to connect the hanging beam 210 to the electric device body.

For example, the hanging hole 2103 is a threaded hole arranged on the side of the hanging beam 210 facing away from the mounting beam. The mounting member may include a threaded member.

In some embodiments, a plurality of hanging holes 2103 may be provided. The plurality of hanging holes 2103 are spaced apart along the second direction y.

In the above solution, providing the hanging hole 2103 on the side of the hanging beam 210 facing away from the mounting beam is convenient to mount the battery on the electric device body.

According to some embodiments of the present application, the battery device 100 includes a box 20. The box 20 has an accommodating cavity inside. The accommodating cavity is configured to accommodate the battery cell assembly 10. The box 20 includes the beam assembly 21. The first mounting beam 211 is located in the accommodating cavity. The first joint 34 is located outside the accommodating cavity.

In some embodiments, the battery cell assembly 10 is in a closed space. For example, the battery device 100 includes the box 20. The box 20 has an accommodating cavity inside. The battery cell assembly 10 is arranged in the accommodating cavity to reduce the influence of external substances on the battery cell assembly 10.

In some embodiments, the beam assembly 21 is a part of the structure of the box 20. The first mounting beam 211 of the beam assembly 21 is located in the accommodating cavity to be connected to the battery cell assembly 10.

Optionally, the box 20 includes a first box body 20a and a second box body 20b. The first box body 20a and the second box body 20b fit each other. The first box body 20a and the second box body 20b together define an accommodating cavity for accommodating the battery cell assembly 10. The beam assembly 21 is a part of the structure of the first box body 20a and can be used as a bottom wall of the box 20.

"The first joint 34 is located outside the accommodating cavity" can be understood as that a connection position between an external pipeline and the first joint 34 is outside the accommodating cavity to be far away from the battery cell assembly 10. For example, the first box body 20a includes the beam assembly 21, a first wall 22, and a second wall 23. The first wall 22 and the second wall 23 are spaced apart along the first direction x and are arranged on the beam assembly 21. The beam assembly 21, the first wall 22, and the second wall 23 are all connected to the second box body 20b to form an accommodating cavity. Along the first direction x, a side of the first wall 22 facing towards the battery cell assembly 10 is an inner side, and a side facing away from the battery cell assembly 10 is an outer side. The first joint 34 is arranged on the outer side of the first wall 22. The first joint 34 and the battery cell assembly 10 can be separated by the first wall 22 in the first direction x.

In the above solution, the battery includes the box 20, and the battery cell assembly 10 is located in the box 20, so that the influence of external substances on the battery cell assembly 10 can be reduced, and thus the battery has high reliability. By arranging the first joint 34 outside the box 20, when a medium leaks at the connection between the first joint 34 and the first lead-out portion 32 or at the connection between the first joint 34 and an external structural member, the phenomenon that the medium enters the accommodating cavity can be alleviated, the risk that the medium affecting the battery cell assembly 10 causes the battery cell assembly 10 to be corroded or short-circuited can be reduced, which is beneficial to the improvement of battery reliability.

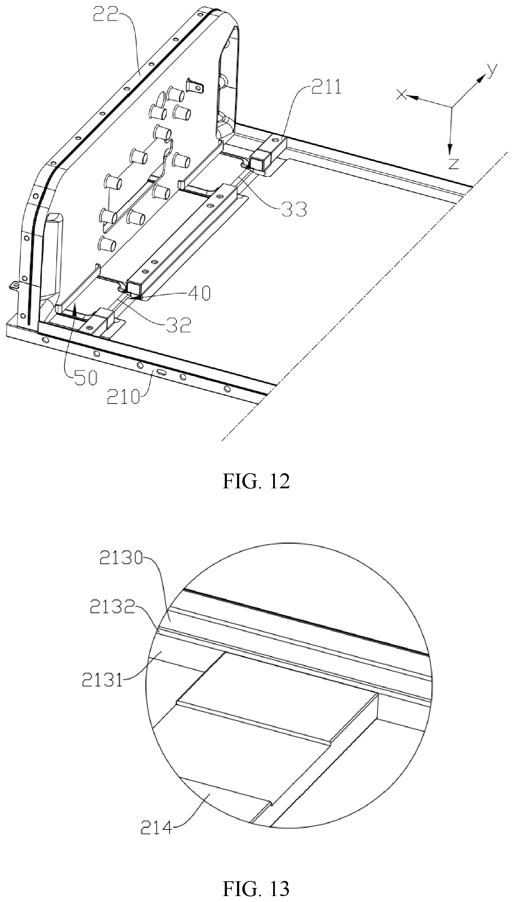

According to some embodiments of the present application, referring to FIG. 12, FIG. 12 is a schematic diagram of a partial structure of the first box body 20a and the thermal management component 30 in some embodiments of the present application. The box 20 further includes a first wall 22. The first joint 34 is located on a side of the first wall 22 facing away from the accommodating cavity. The first lead-out portion 32 passes through the first wall 22.

The first wall 22 may be a part of the structure of the box 20. The first wall 22 is a part of the structure surrounding the accommodating cavity. In some embodiments, the first wall 22 is a part of the structure of the first box body 20a. In some other embodiments, the second wall 23 may also be a part of the structure of the second box body 20b.

Optionally, the first wall 22 is a part of the structure of the first box body 20a. The first wall 22 is connected to the beam assembly 21. The connection relationship between the first wall 22 and the beam assembly 21 includes but is not limited to bonding, welding, riveting, threaded member connection, or other connection relationships, or the first box body 20a is an integrally formed structure formed by die-casting, casting, or extrusion processes.

Along the first direction x, a side of the first wall 22 facing towards the battery cell assembly 10 is an inner side. The inner side of the first wall 22 is used to form the accommodating cavity. A side of the first wall 22 facing away from the battery cell assembly 10 is an outer side. The first joint 34 is arranged on the outer side of the first wall 22. The first joint 34 and the battery cell assembly 10 can be separated by the first wall 22 in the first direction x. The first lead-out portion 32 can pass through the first wall 22 to connect to the first joint 34 located on the outer side of the first wall 22 and to connect to the body 31 located on the inner side of the first wall 22.

In some embodiments, along the first direction x, the first joint 34 and the second joint 35 may be located on the same side of the first wall 22, that is, the second lead-out portion 33 may also run through the first wall 22. In some other embodiments, the first box body 20a includes the first wall 22 and a second wall 23 spaced apart along the first direction x. The first joint 34 is located on an outer side of the first wall 22. The second joint 35 is located on an outer side of the second wall 23. The first lead-out portion 32 passes through the first wall 22. The second lead-out portion 33 passes through the second wall 23.

In some embodiments, "the first lead-out portion 32 passes through the first wall 22" can be understood as that a part of the first lead-out portion 32 is located on the outer side of the first wall 22 and a part of the first lead-out portion 32 is located on the inner side of the first wall 22.

Optionally, the form in which the first lead-out portion 32 passes through the first wall 22 is various. For example, the first wall 22 is formed with a perforation, a through groove, a notch, or the like for the first lead-out portion 32 to pass through; or a part of the beam assembly 21 connected to the first wall 22 may be formed with a groove to form a gap together with the first wall 22 for the first lead-out portion 32 to pass through.

In the above solution, by arranging the first joint 34 on the side of the first wall 22 facing away from the accommodating cavity, the part of the thermal management component 30 that is relatively prone to leakage can be effectively arranged outside the accommodating cavity, thereby effectively reducing the risk that the battery cell assembly 10 is corroded or short-circuited by the medium, so that the battery device 100 has high reliability.

According to some embodiments of the present application, the first wall 22 has a second clearance portion 50 running through along the first direction x. The first lead-out portion 32 runs through the second clearance portion 50. An adhesive member is arranged between an inner wall of the second clearance portion 50 and the first lead-out portion 32.

In some embodiments, the first wall 22 is formed with a second clearance portion 50. The second clearance portion 50 is configured to accommodate and avoid the first lead-out portion 32 so that a part of the first lead-out portion 32 can pass through the first wall 22 to connect to the first joint 34.

In some embodiments, the second clearance portion 50 may include forming a second clearance groove. The second clearance groove may be formed on a surface of the first wall 22 facing towards the beam assembly 21. For example, a first clearance groove is provided on the first mounting beam 211. The first clearance groove accommodates a second part 32b of the first lead-out portion 32. The second clearance groove is configured to accommodate a first part 32a of the first lead-out portion 32. When assembling the thermal management component 30, the first wall 22, and the beam assembly 21, the thermal management component 30 may be assembled on the beam assembly 21 so that the second part 32b of the first lead-out portion 32 is arranged in the first clearance groove. Then the first wall 22 is assembled on the beam assembly 21 so that the second clearance groove of the first wall 22 accommodates the first part 32a of the first lead-out portion 32.

In some embodiments, the connection relationship between the first wall 22 and the first lead-out portion 32 includes but is not limited to bonding, welding, threaded member connection, or the like.

In some embodiments, an adhesive member may be arranged between the inner wall of the first clearance portion 40 and the first lead-out portion 32 to connect the first wall 22 to the first lead-out portion 32. The adhesive member includes but is not limited to double-sided tape, a dried binder, or other adhesive materials.

Optionally, in some embodiments, the first lead-out portion 32 has a second flow channel inside. For example, the first lead-out portion 32 is formed by stacking a first plate 310 and a second body. The first body and the second body are stacked and form the second flow channel. An adhesive member may be arranged between the second clearance groove and the corresponding second flow channel part of the first lead-out portion 32. The groove wall of the second clearance groove and the remaining parts of the first lead-out portion 32 may be connected by welding.

In the above solution, by providing the second clearance portion 50 on the first wall 22 for the first lead-out portion 32 to pass through, the occupation of the internal space of the box 20 by the first lead-out portion 32 can be reduced, and the structure of the thermal management component 30 can be simplified, thereby helping to increase the volumetric energy density of the battery. By arranging the adhesive member between the inner wall of the second clearance portion 50 and the first lead-out portion 32, the connection stability between the thermal management component 30 and the box 20 can be effectively improved, so that the battery structure is highly stable, which is beneficial to the improvement of battery reliability.

According to some embodiments of the present application, referring to FIGs. 2, 3, and 12, the battery device 100 further includes an electrical connector 60 connected to the battery cell assembly 10. The first wall 22 is formed with a first through hole. The electrical connector 60 is mounted in the first through hole. The first wall 22 and the first mounting beam 211 are spaced apart along the first direction x. A part of the electrical connector 60 is located between the first wall 22 and the first mounting beam 211.

The electrical connector 60 may include an electrical plug or an electrical socket for connecting the battery cell assembly 10 to the electric device body to realize the input or output of electric energy between the battery and the electric device body.

The first wall 22 is formed with the first through hole. The electrical connector 60 is mounted in the first through hole and closes the first through hole. In some embodiments, a sealing structure may be provided between the electrical connector 60 and a hole wall of the first through hole. In some embodiments, the electrical connector 60 is connected to the first wall 22, and the connection relationship between the two includes but is not limited to welding, bonding, clamping, threaded member connection, or the like.

In some embodiments, along the first direction x, the first wall 22 and the first mounting beam 211 are spaced apart. The battery cell assembly 10 is located on the side of the first mounting beam 211 facing away from the first wall 22. A part of the structure of the electrical connector 60 can be located between the first wall 22 and the first mounting beam 211 to connect to the battery cell assembly 10.

In the above solution, by mounting the electrical connector 60 in the first through hole, the electrical connector 60 can be conveniently connected to an external component to realize electrical exchange between the battery and the electric device body. By arranging a part of the electrical connector 60 between the first wall 22 and the first mounting beam 211, the risk of mutual interference between the electrical connector 60 and the battery cell assembly 10 can be effectively reduced, the assembly difficulty of the battery device 100 can be reduced, and the manufacturing efficiency of the battery device 100 can be improved.

In some embodiments, the first wall 22 may also be provided with other structural members of the battery device 100. For example, a pressure relief mechanism may be provided on the first wall 22. The pressure relief mechanism may be configured to relieve the pressure inside the box 20.

According to some embodiments of the present application, referring to FIG. 5, the beam assembly 21 has a mounting hole 213 running through along the third direction z. The body 31 is connected to the beam assembly 21 and covers the mounting hole 213. The third direction z is parallel to an arrangement direction of the hanging beam 210 and the mounting beam.

The beam assembly 21 is provided with the mounting hole 213, and the mounting hole 213 runs through the beam assembly 21 along the third direction z. That is to say, the mounting hole 213 extends along the third direction z, and two ends of the mounting hole 213 respectively run through the surfaces on two sides of the beam assembly 21. In other words, the beam assembly 21 may be a frame structure, and the mounting hole 213 running through along the third direction z is formed in the middle thereof.

The thermal management component 30 may be connected to the beam assembly 21. The body 31 of the thermal management component 30 may be connected to the beam assembly 21 and close the mounting hole 213, so that the thermal management component 30 and the beam assembly 21 can be integrated into a whole.

The connection structure between the body 31 and the beam assembly 21 may be various. For example, the body 31 may be connected to the beam assembly 21 by welding, bonding, clamping, or bolt screwing.

In the above solution, with the body 31 of the thermal management component 30 connected to the beam assembly 21 and covering the mounting hole 213, on the one hand, the thermal management component 30 and the beam assembly 21 can be integrated into a whole, so that the structural strength of the battery device 100 can be improved, the influence of external impact on the battery device 100 can be reduced, and the battery device 100 can have high reliability. On the other hand, the thermal management component 30 can be used to replace the bottom plate, reducing the number of parts of the battery device 100, which is beneficial to the improvement of the gravimetric energy density of the battery device 100.

According to some embodiments of the present application, referring to FIG. 13, FIG. 13 is an enlarged view of portion C in FIG. 5. The mounting hole 213 includes a first hole segment 2130 and a second hole segment 2131 arranged along the third direction z. The second hole segment 2131 is away from the accommodating cavity relative to the second hole segment 2131. A hole wall surface of the first hole segment 2130 and a hole wall surface of the second hole segment 2131 are connected by a step surface 2132. The step surface 2132 is disposed facing towards the accommodating cavity. The body 31 is located in the first hole segment 2130, and the body 31 abuts against the step surface 2132.

The mounting hole 213 includes the first hole segment 2130 and the second hole segment 2131 arranged along the third direction z, and the first hole segment 2130 is located on a side of the second hole segment 2131 close to the accommodating cavity. That is to say, the mounting hole 213 is a stepped hole structure, the mounting hole 213 includes at least two hole segments, namely the first hole segment 2130 and the second hole segment 2131, and the first hole segment 2130 is closer to the battery cell assembly 10 in the third direction z than the second hole segment 2131.

The hole wall surface of the first hole segment 2130 and the hole wall surface of the second hole segment 2131 are connected by the step surface 2132, and the step surface 2132 is disposed facing towards the accommodating cavity. That is to say, an inner diameter of the first hole segment 2130 is smaller than an inner diameter of the second hole segment 2131.

In some embodiments, the shapes of the first hole segment 2130 and the second hole segment 2131 correspond to the shape of the body 31. When the body 31 is rectangular, the first hole segment 2130 and the second hole segment 2131 may be rectangular respectively, and the size of the first hole segment 2130 is smaller than the size of the second hole segment 2131 to form the step surface 2132 between the first hole segment 2130 and the second hole segment 2131.

In some embodiments, the body 31 is connected to the step surface 2132. The connection relationship between the two includes but is not limited to bonding, welding, riveting, threaded member connection, or other manners.

In some embodiments, the body 31 may be embedded in the first hole segment 2130, and the surface of the body 31 facing towards the battery cell assembly 10 may be flush with the surface of the first hole segment 2130 facing away from the second hole segment 2131.

For example, in FIG. 13, the mounting hole 213 includes a first hole segment 2130 and a second hole segment 2131 that are connected to each other. That is to say, the stepped-hole-structured mounting hole 213 is only provided with two hole segments, and the two hole segments are the first hole segment 2130 and the second hole segment 2131 respectively. Certainly, in some other embodiments, the number of hole segments of the stepped-hole-structured mounting hole 213 may alternatively be three, four, five, six, or the like. For example, in some embodiments, the mounting hole 213 may further include other hole segments located on a side of the first hole segment 2130 facing away from the second hole segment 2131 or other hole segments located on a side of the second hole segment 2131 facing away from the first hole segment 2130.

It should be noted that in some embodiments where the first clearance portion 40 is arranged on the hanging beam 210, the adapter joint 321 may be arranged on the second surface 31b of the body 31, and the adapter joint may be located in the second hole segment 2131.

In the above solution, the mounting hole 213 includes the first hole segment 2130 and the second hole segment 2131 arranged in the third direction z. The hole wall surface of the first hole segment 2130 and the hole wall surface of the second hole segment 2131 are connected by the step surface 2132, and the step surface 2132 is disposed facing towards the accommodating cavity in the third direction z. Arranging the body 31 of the thermal management component 30 to be in the first hole segment 2130 and abut against the step surface 2132, on the one hand, is convenient to mount the thermal management component 30 in the mounting hole 213, which is beneficial to reducing the assembly difficulty between the thermal management component 30 and the beam assembly 21. On the other hand, the step surface 2132 can also provide a certain limiting effect and positioning effect on the thermal management component 30 in the third direction z, which is beneficial to improving the stability and reliability of the thermal management component 30 mounted on the beam assembly 21.

According to some embodiments of the present application, referring to FIGs. 5 and 13, the beam assembly 21 further includes a support beam 214. The support beam 214 is arranged in the second hole segment 2131 and divides the second hole segment 2131 into at least two sub-through holes. Along the third direction z, the side of the body 31 facing away from the battery cell assembly 10 is connected to the support beam 214.

In some embodiments, the hanging beam 210 may be a frame beam structure, which is formed with a mounting hole 213, and the surface of the hanging beam 210 is provided with the first mounting beam 211 and a second mounting beam 212. The first mounting beam 211 and the second mounting beam 212 are spaced apart along the first direction x. The support beam 214 extends along the second direction y, and its two opposite ends are respectively connected to two opposite parts of the hanging beam 210 along the second direction y.

In some embodiments, the hanging beam 210 may be arranged in the second hole segment 2131 and connected to the hole wall of the second hole segment 2131 to divide the mounting hole 213 into two sub-through holes.

In some embodiments, the connection relationship between the hanging beam 210 and the hole wall of the second hole segment 2131 includes but is not limited to bonding, welding, riveting, or threaded member connection. Alternatively, the beam assembly 21 is an integrally formed structure. When manufacturing the beam assembly 21, the support beam 214 is formed synchronously.

The support beam 214 is located on a side of the body 31 facing away from the battery cell assembly 10 and abuts against the body 31. That is to say, the body 31 is located on a side of the support beam 214 facing towards the battery cell assembly 10, and the body 31 abuts against the support beam 214 along the third direction z.

Optionally, the structure and shape of the support beam 214 may be various. For example, in FIG. 5, the support beam 214 is a plate-shaped structure. It may extend along the first direction x or along the second direction.

Optionally, one or more support beams 214 may be arranged in the mounting hole 213. For example, in FIG. 5, only one support beam 214 is arranged in the mounting hole 213. Certainly, in some other embodiments, the number of support beams 214 arranged in the mounting hole 213 may alternatively be two, three, four, five, or the like. It should be noted that in an embodiment where a plurality of support beams 214 are arranged in the mounting hole 213, the plurality of support beams 214 may be mutually intersecting and connected structures, and the plurality of support beams 214 may alternatively be structures arranged spaced apart along the first direction x or along the second direction y.

In the above solution, by arranging the support beam 214 in the mounting hole 213, on the one hand, the structural strength of the beam assembly 21 can be provided, so that the beam assembly 21 can effectively bear the gravity of the battery cell assembly 10 and stably mount the battery on the electric device body. On the other hand, the support beam 214 can also provide a certain supporting effect on the thermal management component 30, which is beneficial to reducing the risk of deformation of the thermal management component 30 during use, and the support beam 214 can also provide a certain protective effect on the thermal management component 30, which is beneficial to alleviating the phenomenon of direct collision between the thermal management component 30 and the external environment.

According to some embodiments of the present application, the beam assembly 21 further includes a second mounting beam 212. The second mounting beam 212 is connected to the battery cell assembly 10. Along the first direction x, the second mounting beam 212 is spaced apart from the first mounting beam 211. The battery cell assembly 10 is located between the first mounting beam 211 and the second mounting beam 212.

In some embodiments, the beam assembly 21 further includes a second mounting beam 212. The second mounting beam 212 may be a beam structural member extending along the second direction y. The second mounting beam 212 and the first mounting beam 211 are spaced apart along the first direction x. The first mounting beam 211 and the second mounting beam 212 may be configured to position and connect to the battery cell assembly 10 in the first direction x. The connection relationship between the second mounting beam 212 and the battery cell assembly 10 includes but is not limited to bonding, welding, riveting, threaded member connection, or other connection relationships.

In the above solution, the first mounting beam 211 and the second mounting beam 212 being spaced apart along the first direction x, on the one hand, can offer an assembly and positioning effect for the battery cell assembly 10, which is beneficial to reducing the difficulty of assembling the battery cell assembly 10 to the box 20. On the other hand, the battery cell assembly 10 can be effectively fixed to the beam assembly 21, so that the battery cell assembly 10, the mounting beam, and the hanging beam 210 are integrated into a whole, which is beneficial to the improvement of the structural strength of the battery device 100 and enables stable mounting thereof on the electric device body.

According to some embodiments of the present application, the box 20 includes a first box body 20a and a second box body 20b. The first box body 20a and the second box body 20b fit each other and together define an accommodating cavity. The first box body 20a includes the beam assembly 21.

In some embodiments, the box 20 may include two structural members. The two structural members include a first box body 20a and a second box body 20b. The first box body 20a and the second box body 20b fit each other to form an accommodating cavity for accommodating the battery cell assembly 10. In other words, by opening one of the first box body 20a and the second box body 20b, the accommodating cavity can be exposed to maintain the battery cell assembly 10.

That the first box body 20a includes the beam assembly 21 can be understood as that in the battery, the structure that mainly bears the force in the first box body 20a is the first box body 20a. In some embodiments, the first box 20 body may be made of a material with high structural strength. In order to improve the gravimetric energy density, the second box body 20b may be made of a material with low structural strength and low density. For example, the first box body 20a is made of steel, and the second box body 20b is made of aluminum.

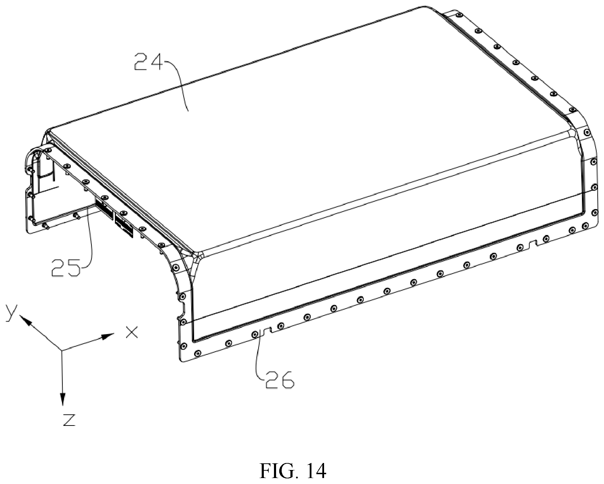

According to some embodiments of the present application, referring to FIGs. 3 and 14, FIG. 14 is a schematic diagram of the second box body 20b in some embodiments of the present application. The first box body 20a further includes the first wall 22 and a second wall 23. The beam assembly 21 connects the first wall 22 to the second wall 23, and the first wall 22 and the second wall 23 are spaced apart along the first direction x. The second box body 20b includes a third wall 24, a fourth wall 25, and a fifth wall 26. The third wall 24 connects the fourth wall 25 to the fifth wall 26, and the fourth wall 25 and the fifth wall 26 are spaced apart along the second direction y. The third wall 24 and the beam assembly 21 are arranged opposite to each other along the third direction z. The first direction x, the second direction y, and the third direction z are perpendicular to each other.

In some embodiments, the first box body 20a is a "U"-shaped structure, and includes the beam assembly 21 and a first wall 22 and a second wall 23 arranged on the beam assembly 21. Along the first direction x, the first wall 22 and the second wall 23 are respectively arranged at two ends of the beam assembly 21. Optionally, the first wall 22 and the second wall 23 may be respectively connected to the hanging beam 210. For example, the connection relationship between the first wall 22 and the beam assembly 21 includes but is not limited to bonding, welding, or threaded member connection, or the first wall 22 is integrally formed on the beam assembly 21. The connection relationship between the second wall 23 and the beam assembly 21 includes but is not limited to bonding, welding, or threaded member connection, or the second wall 23 is integrally formed on the beam assembly 21.

In some embodiments, the second box body 20b is a "U"-shaped structure, and includes a third wall 24 and a fourth wall 25 and a fifth wall 26 arranged on the third wall 24. Along the second direction y, the fourth wall 25 and the fifth wall 26 are respectively arranged on two sides of the third wall 24. For example, the connection relationship between the fourth wall 25 and the third wall 24 includes but is not limited to bonding, welding, or threaded member connection, or the fourth wall 25 is integrally formed on the third wall 24. The connection relationship between the fifth wall 26 and the third wall 24 includes but is not limited to bonding, welding, or threaded member connection, or the fifth wall 26 is integrally formed on the third wall 24.

In some embodiments, the beam assembly 21 can be regarded as a bottom of the box 20, or the beam assembly 21 and the thermal management component 30 are integrated into a whole to form a bottom wall of the box 20. The third wall 24 is a top wall of the box 20. The first wall 22, the second wall 23, the fourth wall 25, and the fifth wall 26 form a peripheral wall of the box 20.

In some embodiments, the first box body 20a is formed with an opening in the second direction y. The first box body 20a is connected to the second box body 20b. The fourth wall 25 and the fifth wall 26 of the second box body 20b close the opening of the first box body 20a along the second direction y.

In the above solution, both the first box body 20a and the second box body 20b being a "U" shaped structure, on the one hand, is convenient for the first box body 20a and the second box body 20b to fit each other and together define the assembly cavity for accommodating the battery cell 11. On the other hand, the manufacturing difficulty of the first box body 20a and the second box body 20b can be reduced, and subsequent maintenance of the battery cell assembly 10 accommodated in the box 20 is facilitated, which is beneficial to reducing the later maintenance difficulty of the battery device 100.

According to some embodiments of the present application, the fourth wall 25 and the fifth wall 26 are respectively connected to two sides of the beam assembly 21 along the second direction y.

In some embodiments, the fourth wall 25 may be connected to an outer side surface of the beam assembly 21 along the second direction y. For example, an inner side surface of the fourth wall 25 and the outer side surface of the beam assembly 21 along the second direction y are attached to each other to form a sealing surface. The sealing surface is perpendicular to the second direction y.

In some embodiments, the fifth wall 26 may be connected to an outer side surface of the beam assembly 21 along the second direction y. For example, an inner side surface of the fifth wall 26 and the outer side surface of the beam assembly 21 along the second direction y are attached to each other to form a sealing surface. The sealing surface is perpendicular to the second direction y.

In some embodiments, an outer side surface of the beam assembly 21 along the second direction y is formed with a plurality of connection holes. A sealing structure, such as a sealing gasket, is provided between parts of the first box body 20a and the second box body 20b that are connected to each other. The first box body 20a and the second box body 20b are connected to each other through connecting members. Some connecting members can pass through the fourth wall 25 and a part of the corresponding sealing structure to be arranged in the corresponding connection holes. Some connecting members can pass through the fifth wall 26 and a part of the corresponding sealing structure to be arranged in the corresponding connection holes.

In the above solution, the fourth wall 25 and the fifth wall 26 are respectively connected to two sides of the beam assembly 21 along the second direction y, so that the connection surface between the fourth wall 25 and the beam assembly 21 and the connection surface between the fifth wall 26 and the beam assembly 21 occupy less space in the second direction y, so as to improve the space utilization rate of the battery in the second direction y, thereby enabling more battery cell assemblies 10 to be accommodated in the box 20 and further increasing the volumetric energy density of the battery device 100.

According to some embodiments of the present application, some embodiments of the present application further provide an electric device. The electric device includes the battery device 100 provided in the first aspect. The battery device 100 is configured to provide electric energy.

The electric device may be any device or system using the battery device 100 as described above.

According to some embodiments of the present application, referring to FIGs. 2 to 14, an electric device is provided.

The electric device includes a box 20, a battery cell assembly 10, and a thermal management component 30. The box 20 includes a first box body 20a and a second box body 20b. The first box body 20a and the second box body 20b fit each other. The first box body 20a and the second box body 20b together define an accommodating cavity for accommodating the battery cell assembly 10.

The first box body 20a and the second box body 20b are respectively in "U"-shaped structures. The first box body 20a includes a beam assembly 21, a first wall 22, and a second wall 23. The first wall 22 and the second wall 23 are spaced apart along a first direction x and are arranged on the beam assembly 21. The beam assembly 21, the first wall 22, and the second wall 23 are all connected to the second box body 20b to form an accommodating cavity. The second box body 20b includes a third wall 24, a fourth wall 25, and a fifth wall 26. The third wall 24 connects the fourth wall 25 to the fifth wall 26, and the fourth wall 25 and the fifth wall 26 are spaced apart along a second direction y. The third wall 24 and the beam assembly 21 are arranged opposite to each other along a third direction z. In some embodiments, the fourth wall 25 and the fifth wall 26 are respectively connected to additional side surfaces of the beam assembly 21 along the second direction y.

The beam assembly 21 includes a hanging beam 210, a first mounting beam 211, and a second mounting beam 212. The first mounting beam 211 and the second mounting beam 212 are spaced apart along the first direction x and are arranged on the hanging beam 210. The beam assembly 21 has a mounting hole 213 running through along the third direction z. The first mounting beam 211 and the second mounting beam 212 are respectively located on two sides of the mounting hole 213 along the first direction x. The mounting hole 213 includes a first hole segment 2130 and a second hole segment 2131 arranged along the third direction z. The second hole segment 2131 is away from the accommodating cavity relative to the second hole segment 2131. A hole wall surface of the first hole segment 2130 and a hole wall surface of the second hole segment 2131 are connected by a step surface 2132. The step surface 2132 is disposed facing towards the accommodating cavity.

The thermal management component 30 includes a body 31, a lead-out portion, and a joint. The lead-out portion includes a first lead-out portion 32 and a second lead-out portion 33. The joint includes a first joint 34 and a second joint 35. A flow channel for accommodating a medium is formed inside the thermal management component 30. The body 31 has a first flow channel 312 inside. The first lead-out portion 32 has a second flow channel inside. The second lead-out portion 33 has a third flow channel inside. The first lead-out portion 32 connects the body 31 to the first joint 34. The second lead-out portion 33 connects the body 31 and the second joint 35. The thermal management component 30 is connected to an external pipeline through the first joint 34 and the second joint 35 to realize the circulation of the medium, thereby exchanging heat with the battery cell assembly 10 and regulating the temperature of the battery cell assembly 10.

The body 31 is connected to the beam assembly 21 and overlaps over the mounting hole 213 to close the mounting hole 213. Along the third direction z, a side of the body 31 facing away from the battery cell assembly 10 abuts against the step surface 2132. A side of the body 31 facing away from the second hole segment 2131 can support the battery cell assembly 10.

The joint is located outside the box 20. The joint is connected to the body 31 through the corresponding lead-out portion.

The first joint 34 and the first lead-out portion 32 are used as an example. The beam assembly 21 is provided with a first clearance portion 40. The first lead-out portion 32 passes through the first clearance portion 40 to connect the first joint 34 to the body 31.

Optionally, in some embodiments, the first clearance portion 40 is provided on the first mounting beam 211. The first clearance portion 40 may be a first clearance groove formed on the first mounting beam 211. The first clearance groove is formed by a side of the first mounting beam 211 facing away from the hanging beam 210 recessing toward the hanging beam 210. The first lead-out portion 32 and the body 31 are an integrally formed structure. A part of the first lead-out portion 32 may be arranged in the first clearance groove. One part of the first lead-out portion 32 is located outside the first clearance groove and is connected to the body 31. The other part of the first lead-out portion 32 may pass through the first wall 22 to connect to the first joint 34 on the outer side of the first wall 22.

Optionally, in some embodiments, the first clearance portion 40 is provided on the hanging beam 210. The first clearance portion 40 may be a first clearance hole formed inside the hanging beam 210. With the first clearance hole formed inside the hanging beam 210, along the first direction x, a side of the hanging beam 210 facing towards the battery cell assembly 10 is formed with a first opening 2100. The first opening 2100 communicates with the first clearance hole for an end portion of the first lead-out portion 32 to pass through to connect to the body 31. Along the third direction z, a surface of the hanging beam 210 facing towards the first mounting beam 211 is formed with a second opening 2101. The second opening 2101 communicates with the first clearance hole for an end portion of the first lead-out portion 32 to pass through to connect to the first joint 34. In these embodiments, the first lead-out portion 32 may include an adapter tube 320 and an adapter joint 321. The adapter joint 321 is arranged on a side of the body 31 facing away from the battery cell assembly 10. Along the first direction x, an opening of the adapter joint 321 is arranged facing toward the first joint 34. The first clearance hole extends along the first direction x. The adapter tube 320 is arranged in the first clearance groove. One end of the adapter tube 320 is plugged into the opening of the adapter joint 321. The other end of the adapter tube 320 is bent along the third direction z and integrally formed with the first joint 34.

In the above solution, by providing an avoidance structure on the beam assembly 21 for a part of the structure of the thermal management component 30 to pass through, so as to arrange the joint outside the box 20, on the one hand, when a medium leaks at the connection position of the joint, the phenomenon that the medium enters the box 20 and directly acts on the battery cell 11 group can be alleviated, so as to reduce the risk that the battery cell assembly 10 is corroded by the medium or experiences an internal short circuit, so that the battery device 100 has high reliability. On the other hand, the joint does not occupy the space where the battery cell assembly 10 is located, and the space occupied by the beam assembly 21 itself is utilized to lead a part of the thermal management component 30 out of the box 20 to connect to the first joint 34, which can reduce the space occupancy rate of the thermal management component 30, so that the battery has more space to accommodate the battery cell assembly 10, which helps to increase the volumetric energy density of the battery device 100.

The above are only the preferred embodiments of the present application and are not used to limit the present application. For those skilled in the art, the present application may have various modifications and changes. Any modifications, equivalent replacements, improvements, and the like made within the spirit and principles of the present application shall be included in the protection scope of the present application.

## Claims

1. A battery device, comprising:
a battery cell assembly;
a beam assembly comprising a first mounting beam and a hanging beam that are connected to each other, wherein the first mounting beam is configured to be connected to the battery cell assembly, and the hanging beam is configured to connect the battery cell assembly to an electric device body; and
a thermal management component comprising a body, a first lead-out portion, and a first joint, wherein the body is configured to exchange heat with the battery cell assembly, the body is located on one side of the first mounting beam along a first direction, the first joint is located on the other side of the first mounting beam along the first direction, and the first lead-out portion connects the body to the first joint;
wherein the beam assembly is provided with a first clearance portion, and the first lead-out portion passes through the first clearance portion.

2. The battery device according to claim 1, wherein
the first clearance portion is provided on the first mounting beam.

3. The battery device according to claim 2, wherein
the first clearance portion is a first clearance groove, and the first clearance groove is formed by a side of the first mounting beam facing away from the hanging beam recessing toward the hanging beam.

4. The battery device according to claim 2 or 3, wherein
the first lead-out portion is integrally formed with the body.

5. The battery device according to claim 1, wherein
the first clearance portion is provided on the hanging beam.

6. The battery device according to claim 5, wherein
at least part of the first lead-out portion is embedded in the hanging beam.

7. The battery device according to claim 6, wherein
the first lead-out portion is connected to a side of the body facing away from the battery cell assembly.

8. The battery device according to claim 7, wherein
the first lead-out portion comprises an adapter tube and an adapter joint, the adapter joint is arranged on the side of the body facing away from the battery cell assembly, the adapter tube connects the adapter joint to the first joint, and at least part of the adapter tube is embedded in the hanging beam.

9. The battery device according to claim 8, wherein
along a direction from the first mounting beam to the hanging beam, the adapter joint does not exceed a surface of the hanging beam facing away from the first mounting beam.

10. The battery device according to any one of claims 1 to 9, wherein
the first lead-out portion extends along the first direction.

11. The battery device according to any one of claims 1 to 10, wherein
the first mounting beam extends along a second direction, the first mounting beam and the hanging beam are arranged along a third direction, and the first direction, the second direction, and the third direction are perpendicular to each other.

12. The battery device according to any one of claims 1 to 11, wherein
the hanging beam is integrally formed with the first mounting beam, or the hanging beam and the first mounting beam are separate structures.

13. The battery device according to any one of claims 1 to 12, wherein
the body comprises a first plate body and a second plate body, and the first plate body and the second plate body are stacked and together form a first flow channel for accommodating a medium.

14. The battery device according to any one of claims 1 to 13, wherein
along the third direction, a side of the hanging beam facing away from the mounting beam is formed with a hanging hole, and the third direction is parallel to an arrangement direction of the hanging beam and the mounting beam .

15. The battery device according to any one of claims 1 to 14, wherein
the battery device comprises a box, the box has an accommodating cavity inside, the accommodating cavity is configured to accommodate the battery cell assembly, the box comprises the beam assembly, the first mounting beam is located in the accommodating cavity, and the first joint is located outside the accommodating cavity.

16. The battery device according to claim 15, wherein
the box further comprises a first wall, the first joint is located on a side of the first wall facing away from the accommodating cavity, and the first lead-out portion passes through the first wall.

17. The battery device according to claim 16, wherein
the first wall has a second clearance portion running through along the first direction, the first lead-out portion runs through the second clearance portion, and an adhesive member is arranged between an inner wall of the second clearance portion and the first lead-out portion.

18. The battery device according to claim 16 or 17, wherein
the battery device further comprises an electrical connector connected to the battery cell assembly, the first wall is formed with a first through hole, and the electrical connector is mounted in the first through hole; and
the first wall and the first mounting beam are spaced apart along the first direction, and a part of the electrical connector is located between the first wall and the first mounting beam.

19. The battery device according to any one of claims 15 to 18, wherein
the beam assembly has a mounting hole running through along a third direction, the body is connected to the beam assembly and covers the mounting hole, and the third direction is parallel to an arrangement direction of the hanging beam and the mounting beam .

20. The battery device according to claim 19, wherein
the mounting hole comprises a first hole segment and a second hole segment arranged along the third direction, the second hole segment is away from the accommodating cavity relative to the second hole segment , a hole wall surface of the first hole segment and a hole wall surface of the second hole segment are connected by a step surface, the step surface is disposed facing towards the accommodating cavity, the body is located in the first hole segment, and the body abuts against the step surface.

21. The battery device according to claim 20, wherein
the beam assembly further comprises a support beam, the support beam is arranged in the second hole segment and divides the second hole segment into at least two sub-through holes, and along the third direction, the side of the body facing away from the battery cell assembly is connected to the support beam.

22. The battery device according to any one of claims 15 to 21, wherein
the beam assembly further comprises a second mounting beam, the second mounting beam is connected to the battery cell assembly, along the first direction, the second mounting beam is spaced apart from the first mounting beam, and the battery cell assembly is located between the first mounting beam and the second mounting beam.

23. The battery device according to any one of claims 15-22, wherein
the box comprises a first box body and a second box body, the first box body and the second box body fit each other and together define the accommodating cavity, and the first box body comprises the beam assembly.

24. The battery device according to claim 23, wherein
the first box body further comprises the first wall and a second wall, the beam assembly connects the first wall to the second wall, and the first wall and the second wall are spaced apart along the first direction; and
the second box body comprises a third wall, a fourth wall, and a fifth wall, the third wall connects the fourth wall to the fifth wall, the fourth wall and the fifth wall are spaced apart along a second direction, the third wall and the beam assembly are arranged opposite to each other along a third direction, and the first direction, the second direction, and the third direction are perpendicular to each other.

25. The battery device according to claim 24, wherein
the fourth wall and the fifth wall are respectively connected to two sides of the beam assembly along the second direction.

26. An electric device, comprising the battery device according to any one of claims 1 to 25, wherein the battery device is configured to provide electric energy.
